# EUROPÄISCHE PATENTSCHRIFT

(11) **EP 2 756 262 B1**
(45) Veröffentlichungstag und Bekanntmachung des Hinweises auf die Patenterteilung: **19.04.2017**
(21) Anmeldenummer: 12759683.1
(22) Anmeldetag: 12.09.2012
(51) Int. Cl.: G01C 15/00, G01S 17/66, E02F 3/84

(54) **GEODÄTISCHES VERMESSUNGSSYSTEM UND VERFAHREN MIT MULTIPLER ZIELVERFOLGUNGSFUNKTIONALITÄT**
GEODESIC MEASURING SYSTEM AND METHOD WITH MULTIPLE TARGET TRACKING FUNCTIONALITY
SYSTÈME DE MESURE GÉODÉSIQUE ET PROCÉDÉ DOTÉ D'UNE FONCTIONNALITÉ DE SUIVI DE CIBLE MULTIPLE

(30) Priorität: 13.09.2011 EP 11181118
(43) Veröffentlichungstag der Anmeldung: 23.07.2014
(73) Patentinhaber: Hexagon Technology Center GmbH, 9435 Heerbrugg (CH)
(72) Erfinder: METZLER, Bernhard, A-6850 Dornbirn (AT)
(74) Vertreter: Gyaja, Christoph Benjamin
(86) Internationale Anmeldenummer: PCT/EP2012/067870
(87) Internationale Veröffentlichungsnummer: WO 2013/037848

(56) Entgegenhaltungen:
- WO-A1-2008/106999
- US-A1- 2009 171 618

## Beschreibung

Die Erfindung betrifft ein geodätisches Vermessungssystem, zur Erkennung und insbesondere Verfolgung eines beweglichen Zielobjekts mit einem anzuvisierenden Zielpunkt nach dem Oberbegriff des Anspruchs 1 und ein mit einem solchen System ausführbares Vermessungsverfahren nach dem Oberbegriff des Anspruchs 12. Die Erfindung betrifft ein zugehöriges Computerprogrammprodukt gemäss Anspruch 15 und Verwendungen bzw. Anwendungen zur Kontrolle und/oder Steuerung von Baumaschinen, gemäss Anspruch 16.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert oder auf einem beweglichen Fahrzeug montiert werden. Diese bestehen beispielsweise aus einem Lotstock mit einem Reflektor (z.B. einem Rundum-Prisma) zur Definition der Messtrecke bzw. des Messpunktes. Es sind aber auch reflektorlos arbeitende Vermessungssysteme möglich, wie sie beispielsweise in der europäischen Patentanmeldung mit der Anmeldenummer EP 10168771.3 beschrieben sind.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -Verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können des Weiteren über eine Funkdatenschnittstelle verfügen zum Aufbau einer Funkverbindung zu externen Peripheriekomponenten, wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, so dass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der Europäischen Patentanmeldung Nr. 09152540.2 beschrieben. Automatische Fokussiereinrichtungen für Zielfernrohre geodätischer Geräte sind z.B. aus der DE 197 107 22, der DE 199 267 06 oder der DE 199 495 80 bekannt.

Beispielhaft ist der Aufbau gattungsgemässer Zielfernrohre von geodätischen Geräten in den Veröffentlichungsschriften EP 1 081 459 oder EP 1 662 278 gezeigt.

Einige Vermessungsgeräte mit hoher Ausbaustufe weisen inzwischen eine automatische Zielverfolgungs-Funktion für als Ziel-Reflektor dienende Prismen (ATR: "Automatic Target Recognition") auf. Dafür sind gängigerweise eine weitere separate ATR-Lichtquelle und ein für die Emissionswellenlänge dieser Lichtquelle sensitiver ATR-Detektor (z.B. CCD-Flächensensor) zusätzlich im Teleskop integriert.

Im Rahmen der ATR-Feinanziel- und ATR-Zielverfolgungs-funktion wird dabei in Richtung der optischen Zielachse der Visiereinrichtung der ATR-Messstrahl emittiert. Dieser wird beispielsweise an einem Rundum-Prisma (als Ziel-Reflektor) retro-reflektiert und der reflektierte Strahl vom ATR-Sensor erfasst. Je nach Abweichung der Ausrichtung der optischen Zielachse vom Rundum-Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde).

Ist dies der Fall, so wird üblicherweise motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der Soll-Position auf dem ATR-Flächensensor zusammenfällt).

Zur Sicherstellung des Funktionierens der automatischen Anzielung basierend auf Auswertung der Position des Reflexflecks des am Prisma retro-reflektierten ATR-Messstrahls auf dem ATR-Flächensensor ist es erforderlich, vor Funktionsstart die Visiereinrichtung zumindest derart ungefähr auf den Ziel-Reflektor auszurichten, dass der ATR-Messstrahl auch auf dem Prisma und von dort reflektiert auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Neben der ATR-Feinanzielfunktion kann auf ähnliche Weise und unter Verwendung derselben ATR-Komponenten (wie ATR-Lichtquelle und ATR-Detektor) auch eine automatische Zielverfolgungs-Funktionalität bereitgestellt sein. Nach erfolgter ATR-Feinanzielung (d.h. nachdem die Visiereinrichtung derart auf das Ziel ausgerichtet ist, dass das Zentrum des ATR-Messstrahlungs-Reflexfleck mit der - mit der Zielachse korrespondierenden - Soll-Position auf dem ATR-Flächensensor zusammenfällt) kann dann die Anvisiereinrichtung weiterhin derart Bewegungen des Zieles "live" und entsprechend schnell nachgeführt werden, dass das Zentrum des ATR-Messstrahlungs-Reflexfleck weiterhin möglichst genau und stets auf der Soll-Position auf dem ATR-Flächensensor bleibt. Es wird dann oft davon gesprochen, dass das Ziel "eingelockt" ist. Probleme können hierbei auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft). Andere Ursachen für eine Unterbrechung der optischen Verbindung zwischen Haupt- bzw. Totalstation und Zielobjekt können beispielsweise ungünstige Umweltbedingungen (Niederschläge, Nebel, Staub etc.) oder schlicht Hindernisse, welche die optische Verbindung blockieren, sein.

Für eine Behebung dieses Problems sind aus dem neueren Stand der Technik verschiedene Lösungsvorschläge bekannt.

Dabei bezieht sich im Folgenden die Bezeichnung "optischer Verfahren" auf Technologien basierend auf Lichtaussendung und/oder -Detektion im UV- bis IR-Bereich, wie beispielsweise durch bekannte Laserlichtquellen erzeugbar. Mit "nicht-optischen Verfahren" werden Technologien bezeichnet, die entweder nicht auf Detektion elektromagnetischer Strahlung beruhen oder sich auf elektromagnetische Strahlung, beispielsweise in Fall von GPS ("Global Positioning System"), in anderen Frequenzbereichen beziehen.

Z.B. wird in der EP 2 141 450 ein Vermessungsgerät mit Funktion zur automatischen Anzielung eines retroreflektierenden Ziels sowie mit automatischer Zielverfolgungsfunktionalität beschrieben. Um dabei auch bei schnellen und ruckartigen Bewegungen das Ziel im "eingelockten" Zustand zu halten und nicht aus dem Sichtbereich des Feinanziel-Detektors zu verlieren, wird vorgeschlagen, parallel durch eine (im sichtbaren Wellenlängenbereich sensitive) Überblickskamera Bilder des Ziels aufzunehmen, einen bestimmten Bildausschnitt als Ziel zu definieren und anhand von Bildverarbeitung Bewegungen des Ziels (bzw. Bewegungen von sich zusammen mit dem Ziel mitbewegenden Objekten) zu verfolgen, und dadurch im Falle eines Verlierens des Ziels aus dem "eingelockten" Zustand das Wiederauffinden und Wiedereinlocken des RetroReflektors zu erleichtern. Dieser Lösungsvorschlag erfordert aber für seine Umsetzung eine hochkomplexe Bildbearbeitungs-Software und führt zwangsläufig zu einer signifikanten Unterbrechungszeit bei der Zielverfolgung durch die Anziel- bzw. Anvisiereinheit.

Ein anderer Lösungsweg basierend auf einem GPS ("Global Positioning System") wird in der US 6,035,254 vorgeschlagen. Gemäss dieser Patentschrift ist das Zielobjekt ausgestattet mit einem Empfänger zum Empfang von GPS-Daten. Positionsinformationen für eine Abschätzung der Position des Zielobjekts aus empfangenen GPS-Daten werden an eine Totalstation übermittelt, woraus seitens der Totalstation bestimmt wird, wie die Totalstation ausgerichtet werden muss für eine Anvisierung und Verfolgung des Zielobjekts. Diese technische Lösung erscheint vorwiegend bezweckt für einen ersten Ausrichtungsschritt für eine Anvisierung des Zielobjekts. Ein kontinuierlicher Abgleich von GPS-Daten mit den Positionsbestimmungsdaten der Totalstation wird nicht offenbart, so dass auch kein Hinweis auf eine Stabilisierung einer optischen Zielverfolgungs- bzw. Positionsbestimmungsfunktionalität durch Kombination mit einer anderen, nicht-optischen Zielverfolgungs- bzw. Bewegungsbestimmungsfunktionalität zu entnehmen ist. Insbesondere gibt es keinen Hinweis darauf, wie optische und nicht-optische Vermessungsdaten unter Benutzung eines Algorithmus mathematisch miteinander kontinuierlich kombiniert oder abgeglichen werden könnten und dass eine stabilisierte Verfolgung der Position des Zielobjekts kontinuierlich mithilfe der miteinander abgeglichenen Daten der optischen Positionsbestimmungsfunktionalität und der nicht-optischen Bewegungsbestimmungsfunktionalität erfolgen könnte.

In der US 2009/0171618 wird ein geodätisches Vermessungssystem mit einer Totalstation mit Anzieleinheit und einer optischen Zielverfolgungsfunktionalität in einer ähnlichen Ausbildungsform wie sie, wie vorangehend beschrieben, aus dem Stand der Technik bekannt ist, offenbart. Für eine Lösung des Problems, dass die optische Zielverfolgung, beispielsweise aufgrund schneller und/oder ruckartiger Bewegungen des Zielobjekts, unterbrochen wird, indem das Zielobjekt aus dem Sichtfeld der Anzieleinheit verschwindet, wird in der US 2009/0171618 eine Positionsbestimmungsfunktionalität zur Bestimmung einer Bewegungsrichtung und einer Bewegungsstrecke eines Zielobjekt, also entsprechend einer Bewegungsbestimmungsfunktionalität, offenbart. Als technische Umsetzung zur Erfüllung der Bewegungsbestimmungsfunktionalität wird ein auf dem Zielobjekt oder in einem Baufahrzeug beim Ort des Zielobjekts montierter Beschleunigungssensor beschrieben, dessen gemessene Beschleunigungssignale mittels einer Kontrolleinheit integriert werden, woraus Geschwindigkeit der Bewegung und zurückgelegte Distanz ab einem vorgegebenen Zeitpunkt, nämlich dem jeweils letzten Empfang von optischen Positionsbestimmungsdaten von der Totalstation, bestimmt und abgespeichert werden. Aus den gemessenen Beschleunigungssignalen wird jeweils eine Vorhersage für die Position des Zielobjekts bis zum Zeitpunkt des nächsten Eintreffens von optischer Positionsbestimmungseinheit der Totalstation erstellt. Dann werden die zuvor gespeicherten Daten überschrieben. Die Daten der Bewegungsbestimmungsfunktionalität werden also nicht kontinuierlich mit den Daten der optischen Zielverfolgungs- bzw. Positionsbestimmungsfunktionalität durch einen Algorithmus kombiniert, sondern bis vor den Zeitpunkt der zuletzt erfolgten Übermittlung von optischen Positionsbestimmungsdaten jeweils verworfen. Damit erfüllt die in der US 2009/0171618 offenbarte Problemlösung lediglich eine Hilfsfunktionalität zum Wiederauffinden des Zielobjekts nach einem Verlust des optischen Kontakts. Ein Vorschlag für eine kontinuierliche Stabilisierung des Prozesses der Zielverfolgung durch kontinuierliche Kombination der Daten aus optischer Positionsbestimmungsfunktionalität und nicht-optischer Bewegungsbestimmungsfunktionalität ist jedoch nicht angedeutet oder zu entnehmen.

In der DE 197 50 207 wird ein geodätisches Vermessungssystem mit einer Trägheitsmesseinrichtung zur Erfüllung einer Bewegungsbestimmungsfunktionalität unterstützten Zielverfolgungsfunktionalität offenbart. Die Trägheitsmesseinrichtung kann beispielsweise Beschleunigungsmesser und/oder Kreisel umfassen. In der DE 197 50 207 werden verschiedene Ausführungsformen beschrieben, gemäss derer die Trägheitsmesseinrichtung am Zielobjekt oder an einer Anziel- bzw. Visiereinrichtung angeordnet sein kann und dabei Bewegungen des Zielobjekts oder der Anziel- bzw. Visiereinrichtung misst. Als Anziel- bzw. Visiereinrichtung werden beispielsweise ein Messfernrohr eines Theodoliten oder eines Tachymeters zur Erfüllung einer optischen Positionsbestimmungsfunktionalität erwähnt. Ein Vorschlag für eine kontinuierliche Stabilisierung des Prozesses der Zielverfolgung durch kontinuierliche Kombination der Daten aus optischer Positionsbestimmungsfunktionalität und nicht-optischer Bewegungsbestimmungsfunktionalität ist jedoch auch in der DE 197 50 207 nicht angedeutet oder aus dieser Offenlegungsschrift zu entnehmen.

Aufgabe der Erfindung ist die Bereitstellung eines geodätischen Vermessungssystems mit einer gegenüber dem Stand der Technik verbesserten Zielverfolgungsfunktionalität, wodurch insbesondere der Prozess der Zielverfolgung stabilisiert und Vermessungsunterbrüche durch einen Verlust des optischen Kontakts zwischen einer Anziel- bzw. Visiereinheit und dem Zielobjekt minimiert werden können.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Das erfindungsgemässe Vermessungssystem zur Vermessung und Verfolgung eines beweglichen, einen Zielpunkt definierenden Zielobjekts, weist auf:
- ein eine erste Einheit darstellendes Vermessungsgerät, insbesondere ausgebildet als Theodolit, Totalstation oder Laser-Tracker, mit Positionsbestimmungsfunktionalität zur Bestimmung der Position des Zielpunkts mit Bezug zu einem inneren Koordinatensystem, mit
   □ einer Basis,
   □ einer eine Zielachse definierenden Anzieleinrichtung, wobei die Ausrichtung der Zielachse zur hochpräzisen Anvisierung und Verfolgung des Zielpunkts motorisiert gegenüber der Basis veränderbar ist,
   □ einem photosensitiven flächenhaften Detektor zur fortlaufenden Erzeugung eines jeweils aktuellen Ablage-Signals, das direkt von einer Richtung und einem Ausmass einer Abweichung zwischen einer jeweils aktuellen, tatsächlichen Ausrichtung der Zielachse und einer fiktiven, den Zielpunkt hochpräzise anvisierten Ausrichtung der Zielachse abhängt,
   □ Winkelmessfunktionalität zur fortlaufenden hochpräzisen Erfassung der aktuellen Ausrichtung der Zielachse, und
   □ Distanzmessfunktionalität zur fortlaufenden Bestimmung der jeweils aktuellen Entfernung zum Zielpunkt,
- eine zielobjektseitig vorgesehene, zweite Einheit zur Bereitstellung einer von der Positionsbestimmungsfunktionalität der ersten Einheit unabhängigen Funktionalität zur fortlaufenden Bestimmung von Bewegungen und/oder Positionen des Zielobjekts mit Bezug zu einem äusseren Koordinatensystem, und
- eine mit der ersten und zweiten Einheit datenmässig verbundene Kontrolleinheit mit Auswerte-, Datenverarbeitungs- und Steuerungsfunktionalität.

Gemäss der Erfindung weist dabei das Vermessungssystem nun einen Zielpunkt-Verfolgungsmodus auf, in dessen Rahmen automatisch gesteuert durch die Kontrolleinheit entsprechend einem vordefinierten Algorithmus, insbesondere mit Hilfe eines Kalman-Filters,
- seitens der ersten Einheit jeweils aktuell generierte erste Messdaten, die zumindest abhängig sind von
   □ der jeweils aktuellen Ausrichtung der Zielachse und
   □ dem jeweils aktuellen Ablage-Signal, sowie
- seitens der zweiten Einheit jeweils aktuell generierte zweite Messdaten, die abhängig sind von den jeweils aktuell erfassten Bewegungen und/oder Positionen des Zielobjekts (3),
fortlaufend aggregiert, insbesondere akkumuliert, werden und basierend darauf ein Steuersignal abgeleitet wird zur fortlaufenden automatischen motorisierten Änderung der Ausrichtung der Zielachse derart, dass durch die Zielachse fortlaufend der Zielpunkt anvisiert wird.

Gemäss eines spezielle Aspekts der Erfindung kann die erste Einheit zur Generierung der ersten Messdaten mit einer ersten Rate, insbesondere etwa zwischen 1 und 20Hz, und die zweite Einheit zur Generierung der zweiten Messdaten mit einer zweiten Rate, insbesondere etwa zwischen 50 und 500Hz, ausgebildet sein, wobei die zweite Rate höher ist als die erste Rate, und im Rahmen des Zielpunkt-Verfolgungsmodus der vordefinierte Algorithmus mit einer dritten Rate, die höher ist als die erste Rate und insbesondere der zweiten Rate entspricht, getaktet sein.

Im Speziellen kann dabei zudem das Steuersignal mit einer vierten Rate, die höher ist als die erste Rate und insbesondere der dritten Rate entspricht, abgeleitet werden und eine fortlaufende automatische motorisierte Änderung der Ausrichtung der Zielachse anhand des Steuersignals zur Verfolgung des Zielobjekts erfolgen.

Die erste Einheit kann also z.B. mit 1-20 Hz arbeiten und die zweite Einheit (insbesondere im Falle einer Ausbildung der zweiten Einheit als auf MEMS basierte inertiale Messeinheit, auch Trägheitsmesssystem genannt) kann Messungen mit einer Rate von 50-500 Hz oder mehr durchführen. In diesem Fall kann dann auch der Algorithmus (etwa das Kalmanfilter) Ergebnisse mit einer Rate von 500 Hz oder mehr liefern, was die Agilität und somit die Stabilität der erfindungsgemässen Verfolgungs-Funktion erheblich erhöhen kann. Umgekehrt kann etwa bei den optischen Messkomponenten der ersten Einheit "gespart" werden, sodass diese z.B. nur mit einer Rate von 1 Hz oder weniger arbeiten und dennoch eine ausreichend hohe Rate für das hinreichend präzise Ableiten und Bereitstellen des Steuersignals erreicht werden kann.

Andererseits kann jedoch auch - insbesondere im Falle einer Ausbildung der zweiten Einheit als ein GNSS-Modul - die Erfassung, Generierung und Bereitstellung der zweiten Messdaten mit einer geringeren Messrate erfolgen als die vermessungsgeräteseitige Erfassung, Generierung und Bereitstellung der ersten Messdaten. Auch in einem solchen Fall kann das erfindungsgemässe Kombinieren und Abgleichen von grossem Vorteil sein, da dies dann auch mit der (höheren) Rate des Erfassens der ersten Messdaten erfolgen kann und die zweiten Messdaten fortlaufend zur Stabilisierung des Verfolgungs-Vorgangs dienen.

Der Algorithmus kann also generell mit den ersten und zweiten Messdaten mit unterschiedlichen Raten gefüttert werden und dennoch mit der jeweils höheren Rate Auswertungsergebnisse aus der Zusammentragung (Aggregation) der Daten liefern, sodass auch das Steuersignal mit der jeweils höheren Rate abgeleitet werden kann.

Gemäss eines weiteren spezielle Aspekts der Erfindung können im Rahmen des Zielpunkt-Verfolgungsmodus automatisch gesteuert durch die Kontrolleinheit die ersten und zweiten Messdaten jeweils über einen bestimmten zurückliegenden Zeitraum hinweg akkumuliert werden und basierend darauf anhand des Algorithmus eine Prädiktion hinsichtlich einer nah-zukünftigen Position und/oder Bewegung des Zielobjekts erfolgen und das Steuersignal zusätzlich unter Berücksichtigung dieser Prädiktion abgeleitet werden.

Gemäss eines weiteren spezielle Aspekts der Erfindung kann die zweite Einheit ein Trägheits-Messsystem aufweisen oder als solches ausgebildet sein, insbesondere mit auf MEMS basierten Beschleunigungssensoren und Drehratensensoren, im Speziellen jeweils in drei Achsen.

Gemäss eines weiteren spezielle Aspekts der Erfindung kann die zweite Einheit jedoch - zusätzlich oder alternativ - auch ein GNSS-Modul mit GNSS-Antenne aufweisen bzw. alternativ zur Ausbildung als Trägheits-Messsystem auch direkt als GNSS-Modul ausgebildet sein.

Die zweite Einheit ist dabei zur Anbringung in starrer Verbundenheit mit dem Zielobjekt vorgesehen.

Wie bereits im Rahmen der Würdigung des Standes der Technik oben näher erläutert kann das als erste Einheit fungierende Vermessungsgerät für das Bestimmen des Ablage-Signals zudem eine zur Emission von geringfügig divergenter Lichtstrahlen in Richtung der Zielachse installierte Lichtquelle aufweisen, insbesondere einen Laser, zur Beleuchtung eines das Zielobjekt darstellenden Retroreflektors.

Das erfindungsgemässe Vermessungssystem umfasst in Speziellen also ein eine erste Einheit bildendes Vermessungsgerät, insbesondere Theodolit/Totalstation oder Lasertracker, zur Bereitstellung einer im Wesentlichen optischen Positionsbestimmungsfunktionalität zur Bestimmung der Position eines Zielobjekts mit einem Zielpunkt.

Im Falle einer Ausbildung des Vermessungsgeräts als Theodolit oder Totalstation kann die Anzieleinrichtung, die dann insbesondere in Form eines Ziel-Fernrohr mit einem die Zielachse definierenden Objektiv aufgebaut ist, typischerweise gegenüber einer Basis des Vermessungsgeräts zur Änderung einer Ausrichtung der Zielachse motorisiert schwenkbar sein. Die Anzieleinrichtung kann dann integriert den Detektor zur Erfassung eines Signals von dem anvisierten Zielpunkt aufweisen, wobei der Detektor vorzugsweise ortsauflösend bzw. flächenhaft zur Ermöglichung einer Bestimmung der Position eines Zielpunktabbildes (etwa eines zurückgeworfenen Reflexes) auf dem Detektor ausgebildet ist. Ausserdem sind solche als Theodolit oder Totalstation ausgebildete Vermessungsgeräte ausgestattet mit einer Winkelmessfunktionalität zur hochpräzisen Erfassung der Ausrichtung der Anzieleinrichtung und somit auch der Zielachse.

Des Weiteren ist das erfindungsgemässe Vermessungssystem ausgestattet mit funktional separat zur ersten Einheit (also dem Vermessungsgerät) vorhandenen Positionsänderungsbestimmungs-Mittel (zweite Einheit) zur Bereitstellung einer nicht-anzielenden Bewegungs- oder Ortsbestimmungsfunktionalität für eine fortlaufende Bestimmung von Bewegungen bzw. Positionen von dem Zielobjekt relativ zu einem absoluten Bezug, sodass basierend auf diese zusätzliche Bewegungsbestimmungsfunktionalität Vermessungsdaten relativ zu einem äusseren Koordinatensystem (d.h. relativ zur Erde) erfasst und an die Kontrolleinheit übermittelt werden können.

Diese zusätzlich zur ersten Einheit vorhandenen Positionsänderungsbestimmungs-Mittel (d.h. die zweite Einheit) zur Bereitstellung einer separaten, nicht-anzielenden Bewegungserfassungsfunktionalität für das Zielobjekt werden im Rahmen der vorliegenden Erfindung etwa durch
- ein GNSS (als Abkürzung für "Global Navigation Satellite System", zu deutsch globales Satellitennavigationssystem) mit einer zielobjektseitig getragenen GNSS-Antenne und/oder
- ein zielobjektseitig getragenes INS (als Abkürzung für "Inertial Navigation System", zu deutsch "Trägheitsnavigationssystem")
gestellt.

Die Kontrolleinheit ist - mit anderen Worten ausgedrückt - also ausgestattet mit Auswertemitteln zur Verarbeitung von Daten des Vermessungsgeräts, Datenspeicherung und Steuerung der Ausrichtung der Anzieleinrichtung sowie auch Auswertemitteln zur Verarbeitung und Speicherung von Daten der zusätzlichen, durch die zweite Einheit bereitgestellten Eigenbewegungs- oder Eigenortsbestimmungs-Mittel des Systems.

Die Kontrolleinheit kann körperlich dabei integriert in einer der anderen Komponenten des Systems vorliegen oder als eigene körperliche Einheit ausgebildet sein, sodass sich die Kontrolleinheit also z.B. seitens der Vermessungseinheit, seitens des Zielobjekts oder sonst wo befinden kann sowie - je nach dem - in ein Gehäuse der Vermessungseinheit integriert sein kann oder sich in einem separaten eigenen Gehäuse befinden kann. Wesentlich ist lediglich die datenmässige Verbindung zur Vermessungseinheit (als erste Einheit) sowie zur zielobjektseitig vorgesehenen, zweiten Einheit.

Die Kontrolleinheit kann zudem auch jeweils aus mehreren Teileinheiten bestehen, die körperlich verstreut vorliegen, jedoch datenmässig miteinander verbunden sind sowie funktional zusammenarbeiten und somit funktional eine Einheit zur Auswertung/Speicherung von Messdaten und zur Steuerung von Komponenten des Systems bilden.

Erfindungsgemäss umfassen die Auswertemittel der Kontrolleinheit einen Algorithmus, insbesondere ein Kalman-Filter, mit dem im Betriebszustand die Daten der optischen Positionsbestimmungsfunktionalität zur Bestimmung und Verfolgung der Position des Zielpunkts kontinuierlich mit den Daten der nicht-anzielenden Eigenbewegungs- oder Eigenortsbestimmungs-Funktionalität der zweiten Einheit kombiniert und abgeglichen werden und die Verfolgung der Position des Zielobjekts kontinuierlich mithilfe der miteinander abgeglichenen Daten der optischen Positionsbestimmungsfunktionalität und der nicht-anzielenden Funktionalität erfolgt.

Vorzugsweise ist die nicht-anzielende Funktionalität dabei ausgelegt zur Bestimmung von Bewegungen des Zielobjekts.

Die nicht-anzielende Funktionalität bzw. zu deren Bereitstellung erforderliche Messkomponenten (also die zweite Einheit oder zumindest Komponenten der zweiten Einheit) können somit auch im Innern eines zu verfolgenden Fahrzeugs, insbesondere einer Baumaschine oder eines Baufahrzeugs, angeordnet sein oder aber direkt benachbart zu einem Zielobjekt (etwa einem Retro-Reflektor) mit anzuvisierendem Zielpunkt angeordnet sein.

In einer bevorzugten Ausführungsform des erfindungsgemässen Vermessungssystems wird die nicht-anzielende Eigenbewegungs- oder Eigenortsbestimmungs-Funktionalität - wie zuvor bereits erwähnt - durch ein Trägheits-Messsystem realisiert, das insbesondere mit Beschleunigungssensoren und Gyroskopen ausgestattet ist. Insbesondere sind dabei jeweils drei Beschleunigungssensoren und Gyroskope vorgesehen.

In einer anderen Ausführungsform des erfindungsgemässen geodätischen Vermessungssystems kann die nicht-anzielende Eigenbewegungs- oder Eigenortsbestimmungs-Funktionalität - wie ebenso bereits erwähnt - durch Verwendung von Messdaten eines globalen Satellitennavigationssystems (GNSS) realisiert, wobei ein GNSS-Sensor, zur Bestimmung von Position, Positionsveränderungen und Bewegungen des Zielobjekts, mit dem Zielobjekt assoziiert ist. Der GNSS-Sensor (d.h. ein GNSS-Modul mit GNSS-Empfängerantenne) ist insbesondere nahe zum Zielobjekt angebracht, und im Speziellen kann auch ein Neigungssensor, insbesondere ein Zwei-Achsen-Neigungssensor, nahe zum Zielobjekt angebracht sein, mit dem beispielsweise Neigungen des GNSS-Sensors bezüglich des Zielobjekts detektierbar sind. Ein Positionsversatz zwischen dem GNSS-Sensor und dem Zielobjekt ist beispielsweise aus einer Kalibrationsmessung bekannt. Mittels des Zwei-Achsen-Neigungssensors kann aber auch kontinuierlich der Positionsversatz zwischen dem GNSS-Sensor und dem Zielobjekt verfolgt werden. Im Fall eines nur geringfügigen Versatzes und/oder relativ niedrigen Anforderungen an die Messgenauigkeit können die Messwerte des Zwei-Achsen-Neigungssensors gegebenenfalls vernachlässigt werden.

Das als zusätzliche Positionsänderungsbestimmungs-Mittel einsetzbare globale Satellitennavigationssystem GNSS kann - wie dem Fachmann hinlänglich bekannt - beispielsweise nach folgenden Standards ausgeführt sein: GPS ("Global Positioning System", das von den USA betriebene System), GLONASS (das von Russland betriebene System) oder Galileo (das sich in Europa in Planung bzw. Aufbau befindet).

Zusätzlich kann auch die Hauptstation mit einem GNSS-Sensor ausgestattet sein und in bekannter Weise als GNSS-Referenzstation dienen. Dadurch kann die Genauigkeit bei der Verarbeitung der GNSS-Daten verbessert werden.

Das von der Zielachse des erfindungsgemässen Vermessungssystems anzuvisierende Zielobjekt kann vorteilhaft als Reflektor (insbesondere Retro-Reflektor) ausgebildet sein (für die klassische Ermittlung eines Ablage-Signals mit Hilfe eines ATR-Detektors). Bevorzugt ist das Zielobjekt also als ein Reflektor ausgebildet, und die Anzieleinrichtung weist eine ATR-Lichtquelle, insbesondere einen Infrarot-Laser, sowie einen im Wellenlängenbereich der ATR-Lichtquelle sensitiven ATR-Detektor (z.B. CCD-Flächensensor).

Weist die Anzieleinrichtung als den Detektor eine im sichtbaren Bereich abbildende Kamera zur Erfassung eines Bilds vom Zielobjekt auf, kann im Spezialfall auch bei reflektorloser Ausbildungen des Zielobjekts ein Ablage-Signal ermittelt und generiert werden, wie dies etwa in der Europäischen Patentanmeldung mit der Anmeldenummer EP 10168771.3 genauer beschrieben steht.

Ist das anzuvisierende Zielobjekt mit einer oder mehreren Lichtquellen, beispielsweise mit lichtemittierende Dioden (LEDs) oder Laser, ausgestattet, kann auch basierend auf einem Bild, das mit einer geeigneten Kamera vom selbstleuchtenden Zielobjekt aufgenommen wird, ein Ablage-Signal abhängig von der Position des Abbilds des selbstleuchtenden Zielobjekts im aufgenommenen Kamera-Bild abgeleitet werden.

Ein weiterer Gegenstand der Erfindung ist ein Vermessungsverfahren zur Vermessung und Verfolgung eines beweglichen, einen Zielpunkt definierenden Zielobjekts, unter Verwendung der ersten und der zweiten Einheit, die oben bereits näher beschrieben werden.

Im Rahmen des Verfahrens erfolgt dabei nun
- ein fortlaufendes Generieren von ersten Messdaten anhand der ersten Einheit, die zumindest abhängig sind von der jeweils aktuellen Ausrichtung der Zielachse und dem jeweils aktuellen Ablage-Signal,
- ein fortlaufendes Generieren von zweiten Messdaten anhand der zweiten Einheit, die abhängig sind von den jeweils aktuell erfassten Bewegungen und/oder Positionen des Zielobjekt,
- ein fortlaufendes Aggregieren, insbesondere auch Akkumulieren, der ersten und zweiten Messdaten unter Anwenden eines vordefinierten Algorithmus, insbesondere eines Kalman-Filters, und basierend darauf
- ein Ableiten eines Steuersignals zur fortlaufenden automatischen motorisierten Änderung der Ausrichtung der Zielachse derart, dass durch die Zielachse fortlaufend der Zielpunkt anvisiert wird.

Gemäss eines speziellen Aspekts des Verfahrens können dabei
- das Generieren der ersten Messdaten mit einer ersten Rate, insbesondere von etwa zwischen 1 und 20Hz, und das Generieren der zweiten Messdaten mit einer zweiten Rate, insbesondere von etwa zwischen 50 und 500Hz, erfolgen, wobei die zweite Rate höher ist als die erste Rate, und
- der vordefinierte Algorithmus mit einer dritten Rate, die höher ist als die erste Rate und insbesondere der zweiten Rate entspricht, getaktet sein und somit können Ergebnisse aus dem Anwenden des Algorithmus mit der dritten Rate erhalten werden.

Gemäss eines weiteren speziellen Aspekts des erfindungsgemässen Verfahrens können zudem
- das Ableiten des Steuersignals mit einer vierten Rate, die höher ist als die erste Rate und insbesondere der dritten Rate entspricht, und
- ein fortlaufendes motorisiertes Ändern der Ausrichtung der Zielachse anhand des Steuersignals
erfolgen.

Das bedeutet, dass der Algorithmus (etwa das Kalmanfilter) also Ergebnisse mit einer deutlich über der ersten Rate liegenden Rate (die der Messrate der zweiten Einheit entspricht) liefern kann, was die Agilität und somit die Stabilität der erfindungsgemässen Verfolgungs-Funktion erheblich erhöhen kann. Umgekehrt kann etwa bei den optischen Messkomponenten der ersten Einheit "gespart" werden, sodass diese z.B. nur mit einer vergleichsweise geringen Rate arbeiten kann und dennoch eine ausreichend hohe Rate für das hinreichend präzise Ableiten und Bereitstellen des Steuersignals erreicht werden kann.

Gemäss eines weiteren spezielle Aspekts des erfindungsgemässen Verfahrens können unter Anwenden des Algorithmus die ersten und zweiten Messdaten auch jeweils über einen bestimmten zurückliegenden Zeitraum hinweg akkumuliert werden und basierend darauf ein Bestimmen einer Prädiktion hinsichtlich einer zu erwartenden, nah-zukünftigen Position und/oder Bewegung des Zielobjekts erfolgen. Beim Ableiten des Steuersignals kann folglich zusätzlich diese Prädiktion berücksichtigt werden.

Gemäss einer Weiterbildung des zuvor genannten Aspekts können die über einen bestimmten zurückliegenden Zeitraum hinweg akkumulierten ersten und zweiten Messdaten für das Bestimmen der Prädiktion zudem jeweils unterschiedlich gewichtet werden, wobei - in der Tendenz - für ferner zurückliegende Zeitpunkte generierte Daten weniger stark gewichtet werden als für näher zurückliegende Zeitpunkte generierte Daten der jeweils akkumulierten ersten und zweiten Messdaten.

Gemäss einer weiteren Weiterbildung können auch die über den zurückliegenden Zeitraum hinweg akkumulierten ersten und zweiten Messdaten durch gegenseitiges Vergleichen und insbesondere durch eine Regression auf Messfehler hin einzeln überprüft werden und - basierend auf eine solche Überprüfung - für fehlerbehaftet befundene Daten der jeweils akkumulierten ersten und zweiten Messdaten für das Bestimmen der Prädiktion mit vergleichsweise geringer Gewichtung oder gar nicht berücksichtigt werden.

Mit anderen Worten können also im Rahmen des Vermessungsverfahrens zur Verfolgung eines beweglichen Zielobjekts mit einem anzuvisierenden Zielpunkt die folgenden Schritte erfolgen:
- Erfassung eines Ablage-Signals, das von einer Abweichung der tatsächlichen Ausrichtung der Zielachse von einem das Zielobjekt genau anvisierenden Zustand abhängt, mit einem ortsauflösend bzw. flächenhaft ausgebildeten Detektor des Vermessungsgeräts (als erste Einheit);
- Bestimmung der Position des Zielpunkts anhand der Winkelmess- und Entfernungsmessfunktionalität des Vermessungsgeräts;
- Erfassung von (zweiten) Messdaten hinsichtlich einer Bewegung bzw. eines Orts des Zielobjekts mittels der zweiten Einheit;
- Übermitteln der seitens der ersten und zweiten Einheit erfassten und generierten Daten an die Kontrolleinheit;
- Speicherung und Verarbeitung der übermittelten Daten durch die Kontrolleinheit;
- Ausführung eines Algorithmus, insbesondere eines Kalman-Filters, mittels eines auf der Kontrolleinheit gespeicherten Programms, für kontinuierliche Kombination und Abgleich von den gesammelten Messdaten und gegebenenfalls Berechnung von Prädiktions- bzw. Schätzwerten für eine zukünftige Veränderung der Position des Zielobjekts;
- kontinuierliches (fortlaufendes) Ableiten eines Steuerungs-Signals für das Ändern der Ausrichtung des Zielachse der Anzieleinrichtung; und
- kontinuierliches (fortlaufendes) Führen der Anzieleinrichtung basierend auf dem Steuer-Signal, sodass das Ziel fortlaufend durch die Zielachse anvisiert bleibt.

Eine bevorzugte Ausführungsform des erfindungsgemässen Vermessungsverfahrens ist dadurch gekennzeichnet, dass die nicht-anzielende Bewegungsbestimmungsfunktionalität der zweiten Einheit mithilfe eines Trägheits-Messsystem, insbesondere ausgestattet mit Beschleunigungssensoren, zur Erfassung von Bewegungen, und Drehratensensoren (etwa Gyroskopen) zur Erfassung von Änderungen einer Winkellage, ausgeführt wird.

Gemäss einer anderen bevorzugten Ausführungsform des erfindungsgemässen Vermessungsverfahrens wird die nicht-anzielende Eigenorts- bzw. Bewegungsbestimmungsfunktionalität ausgeführt basierend auf Messdaten von GNSS-Sensoren, mit denen Positionen und Bewegungsgeschwindigkeiten des Zielobjekts erfasst werden.

Weitere Ausführungsformen des erfindungsgemässen Verfahrens sind in den abhängigen Ansprüchen bzw. oben bereits als Weiterbildungen von dem erfindungsgemässen Zielpunkt-Verfolgungsmodus des Vermessungssystems analog beschrieben.

Ein weiterer Gegenstand der Erfindung ist ein Computerprogrammprodukt mit Programmcode, der auf einem maschinenlesbaren Träger gespeichert ist, zur Durchführung des fortlaufenden Aggregierens der ersten und zweiten Messdaten entsprechend des vordefinierten Algorithmus, welcher im Programmcode gespeichert ist, und des darauf basierenden Ableitens des Steuersignals des erfindungsgemässen, zuvor beschriebenen Vermessungsverfahrens, insbesondere wenn das Programm auf einer - als Kontrolleinheit des erfindungsgemässen, zuvor beschriebenen Vermessungssystems ausgebildeten - elektronischen Datenverarbeitungseinheit ausgeführt wird.

Das erfindungsgemässe Vermessungssystem und das erfindungsgemässe Vermessungsverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Figur 1: eine automatisierte Totalstation 1 gemäss dem Stand der Technik;
- Figuren 2a/b: eine Illustration der Funktionsweise einer bekannten Zielerkennungs- bzw. Anzielfunktionalität und Zielverfolgungsfunktionalität;
- Figuren 3a/b: beispielhafte Ausführungsformen für das erfindungsgemässe geodätische Vermessungssystem;
- Figur 4: in detaillierter Weise den Datenfluss zwischen einer Kontrolleinheit und verschiedenen Messeinrichtungen sowie einer Totalstation eines erfindungsgemässen geodätischen Vermessungssystems;
- Figur 5: ein weiteres Ausführungsbeispiel eines erfindungsgemässen geodätischen Vermessungssystems;
- Figur 6: ein zu Figur 5 weitgehend analoges Ausführungsbeispiel u.a. mit den Unterschieden zu der Ausführungsform gemäss Figur 5, dass die Kontrolleinheit in einem Baufahrzeug untergebracht ist und der Datentransfer zur Kontrolleinheit drahtlos erfolgt sowie dass von der ersten Einheit Rohdaten von den einzelnen Sensoren (und nicht bereits zu Positionsdaten vorverarbeitete Daten) an die Kontrolleinheit gesendet werden;
- Figur 7: eine weitere Ausführungsform eines erfindungsgemässen geodätischen Vermessungssystems;
- Figur 8: eine weitere Ausführungsform eines erfindungsgemässen geodätischen Vermessungssystems, bei der die Realisierung der nicht-anzielenden zusätzlichen Bewegungsbestimmungsfunktionalität auf der Verwendung von Daten eines globalen Positionsbestimmungssystems beruht; und
- Figuren 9a/b: Funktionalitäten, die mit den vorangehend beschriebenen Ausführungsbeispielen eines erfindungsgemässen geodätischen Vermessungssystems und zugehörigen Vermessungsverfahrens kombinierbar sind.

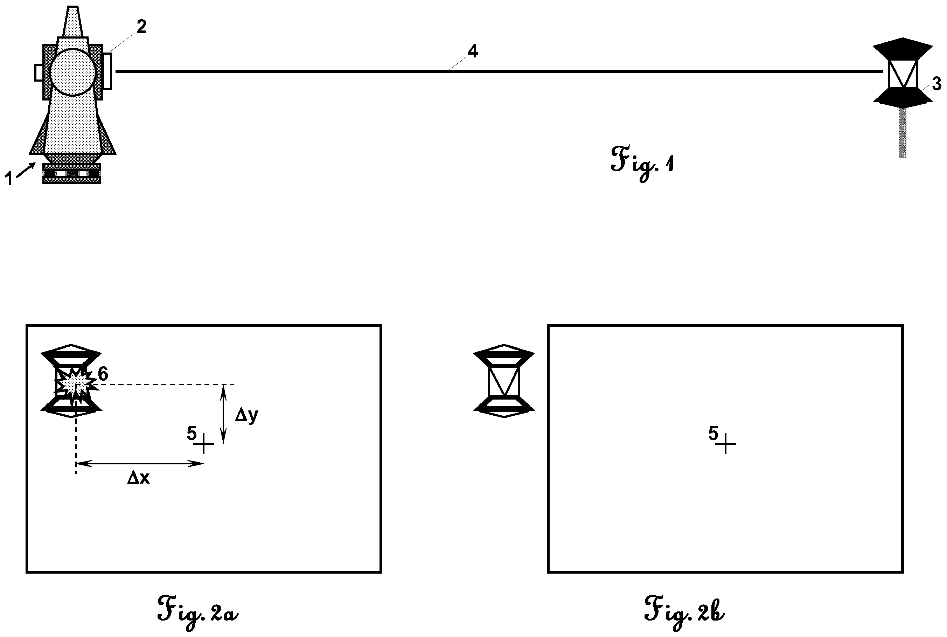

Die anhand der Figuren 1 bis 9b beschriebenen Ausführungsbeispiele beziehen sich vorwiegend, aber nicht ausschliesslich, auf eine zielobjektorientierte Führung von Baumaschinen bzw. Baufahrzeugen, deren veränderliche Position mittels eines mit diesen Baumaschinen bzw. Baufahrzeugen verbundenen Zielobjekts von einer Hauptstation, insbesondere einer Totalstation oder einem Theodoliten aus, bestimmt und verfolgt wird. Andere Anwendungen zur automatisierten Verfolgung eines beweglichen Zielobjekts (z.B. fortlaufende Verfolgung der aktuellen Position eines handgetragenen Reflektorstabs, einer handgehaltenen Abtasteinrichtung (wie Handscanner oder handgeführter messpunktkontaktierender Taster), etc.) sind in der Erfindung mit eingeschlossen.

Die Figuren 1, 2a und 2b illustrieren die Ausgangssituation für die vorliegende Erfindung. Figur 1 zeigt eine automatisierte Totalstation 1 gemäss dem Stand der Technik, mit einer Anzieleinrichtung 2 mit einer Objektiveinheit, beispielsweise einem Zielfernrohr oder einem Teleskop, welche auf ein Zielobjekt 3 ausgerichtet und womit eine optische Zielachse definiert wird. Das Zielobjekt 3 kann beispielsweise als ein Reflektor, insbesondere als ein reflektierendes Prisma, ausgebildet sein. Die Totalstation kann mit einer Laserlichtquelle zur Aussendung eines Laserstrahls 4 auf den Reflektor 3 ausgestattet sein, von wo der Laserstrahl in Richtung der Anzieleinrichtung 2 zurück reflektiert wird. Die Anzieleinrichtung 2 ist mit einem Detektor, insbesondere mit einem ortsauflösenden Detektor wie einem Flächensensor, z.B. einem CCD-Sensor oder einer Kamera, ausgestattet.

Die Figuren 2a und 2b illustrieren die Funktionsweise einer bekannten Zielerkennungs- bzw. Anzielfunktionalität und Zielverfolgungsfunktionalität.

Im Rahmen der Anzielfunktionalität wird dabei in Richtung der optischen Zielachse der Anzieleinrichtung 2 der Laserstrahl 4 emittiert, dieser wird am Reflektor 3 retro-reflektiert und der reflektierte Strahl vom Detektor erfasst. Je nach Abweichung der Ausrichtung der optischen Zielachse vom Reflektor weicht dabei auch die Auftreffposition der reflektierten Strahlung auf dem Detektor bzw. dem ortsauflösenden Sensor von einer zentralen Sensorflächenposition ab (d.h. der Reflexfleck des am Reflektor reflektierten Laserstrahls 4 auf dem Flächensensor liegt nicht in dessen Zentrum und trifft somit nicht auf einer Soll-Position 5 auf, die z.B. anhand Kalibrierung als jene mit der optischen Zielachse korrespondierende Position festgelegt wurde).

Nach grober Erfassung des Zielobjekts durch den ATR-Detektor wird die Anzieleinrichtung nachfolgend genauer auf das Zielobjekt 3 ausgerichtet, und eine nachfolgende Vermessung und Zielverfolgung erfolgt typischerweise unter Aussendung eines kollimierten bzw. geringfügig aufgeweiteten Laserstrahls 4 in Richtung des Zielobjekts 3, wie vorangehend beschrieben.

Figur 2a zeigt im anhand des ATR-Detektors aufgenommenen ATR-Bild [wobei in bekannter Weise das - hier rein für Erklärungszwecke in dieser Figur gezeigte - ATR-Bild direkt über eine Bildverarbeitung ausgewertet wird und im Normalfall nicht auf einem Display für den Benutzer sichtbar dargestellt wird] im Zentrum die Soll-Position 5 und den vom Sensor im Sichtfeld der Anzieleinrichtung 2 erfassten Reflexfleck 6 eines ausgesandten Laserstrahls 4. Der Reflexfleck 6 weist einen Offset <Δx, Δy> von der Soll-Position 5 auf.

Anstelle eines Reflektors kann das Zielobjekt 3 beispielsweise auch als eine Lichtquelle tragen, von der aus ein Lichtstrahl in Richtung der Totalstation ausgesandt wird und deren Erfassung durch einen Flächensensor analog dazu wie in Figur 2a illustriert erfolgt.

Gemäss der festgestellten Abweichung <Δx, Δy> der Position des Reflexflecks 6 von der Soll-Position 5 können Korrekturwinkel für die Ausrichtung der Anzieleinrichtung 2 bestimmt und entsprechende Korrekturen mit angesteuerten Stellmotoren vollzogen werden, bis Reflexfleck 6 und Soll-Position 5 miteinander übereinstimmen, d.h. die Horizontal- und Vertikalwinkel der Visier- bzw. Anzieleinrichtung werden derart iterativ geändert und angepasst, bis das Zentrum des Reflexflecks 6 mit der Soll-Position 5 auf dem Detektor bzw. Flächensensor zusammenfällt (wobei - wie dem Fachmann bekannt - in der Praxis oftmals auch schon nach einer einzigen erfolgten Iteration für das Ausrichtungsändern der Anzieleinrichtung bereits ein hinreichendes Zusammenfallen von Reflexfleck 6 und Soll-Position 5 erreicht sein kann und somit bereits ein hinreichend präzise erfolgtes Anzielen des Ziels bewerkstelligt sein kann).

Neben der Anzielfunktion kann - wie im Stand der Technik ebenso bereits bekannt - auf ähnliche Weise und unter Verwendung derselben elektro-optischen Komponenten (wie Laser-Lichtquelle und Reflektor) auch eine automatische Nachführungs-Funktionalität bereitgestellt sein. Nach erfolgter Zielobjektanzielung (d.h. nachdem die Anzieleinrichtung 2 derart auf das Zielobjekt 3 ausgerichtet ist, dass das Zentrum des Reflexflecks 6 mit der - mit der Zielachse korrespondierenden - Soll-Position 5 auf dem Detektor bzw. Flächensensor zusammenfällt) kann dann die Anzieleinrichtung 2 weiterhin derart Bewegungen des Zielobjekts 3 "live" und entsprechend schnell nachgeführt werden, dass das Zentrum des Reflexflecks 6 weiterhin möglichst genau und stets auf der Soll-Position 5 auf dem Flächensensor bleibt. Es wird dann oft davon gesprochen, dass das Ziel "eingelockt" (oder eingerastet, angekoppelt, mit dem Ziel verriegelt) ist. Probleme können hierbei auftreten, wenn sich das Zielobjekt 3 derart ruckartig und schnell bewegt, dass es aus dem Sichtbereich des Detektors oder dem Kegel des Laserstrahls verschwindet (d.h. keine am Zielobjekt 3 reflektierte Messstrahlung mehr auf dem Sensor auftrifft). Für reflektorlos ausgeführte Zielobjekte 3 ohne deren Verfolgung mit einem Laserstrahl 4 ist die Situation analog.

Andere Ursachen für Störungen können beispielsweise ungünstige Umweltbedingungen (Niederschläge, Nebel, Staub etc.) oder schlicht Hindernisse, welche die optische Verbindung blockieren, sein. Ausserdem können auch Probleme dadurch auftreten, dass sich mehrere Reflektoren im Sichtfeld befinden, dass sich weitere reflektierende Teile im Sichtfeld befinden (die Störreflexe verursachen, etwa Scheinwerfer von Fahrzeugen, reflektierende Kleidungsstücke wie Jacken, etc.), oder auch dass der ATR-Laserstrahl mehrere Flächen eines einzigen Rundum-Prismas gleichzeitig trifft und somit mehrere nahe beieinander liegende Reflexe durch ein einziges Rundum-Prismas erzeugt werden (sog. "Flying Spots").

Erfindungsgemäss erfolgt daher der Zielverfolgungs-Modus basierend auf eine fortlaufende Auswertung von kombinierten und zusammengetragenen Messdaten, die sowohl
- durch das Vermessungsgerät (als erste Einheit) als auch
- durch eine separate, zielobjektseitig vorgesehene, zweite Einheit zur Eigenorts- bzw. Eigenbewegungsbestimmung
fortlaufend generiert und zur Auswertung bereitgestellt werden.

Erfindungsgemäss wird im Vermessungsgerät dafür beispielsweise anhand von mit einem flächenhaften photosensitiven ATR-Detektor fortlaufend aufgenommenen ATR-Bildern - wie etwa schematisch in Figur 2a gezeigt - jeweils fortlaufend ein aktuelles Ablage-Signal erzeugt, das direkt von einer Richtung und einem Ausmass einer Abweichung zwischen einer jeweils aktuellen, tatsächlichen Ausrichtung der Zielachse und einer fiktiven, den Zielpunkt hochpräzise anvisierten Ausrichtung der Zielachse abhängt.

Eine beispielhafte Situation, in welcher sich das dargestellte Rundum-Prisma ausserhalb des Sichtfeldbereichs des ATR-Detektors befindet, ist in Figur 2b illustriert [wobei wiederum das - hier rein für Erklärungszwecke in dieser Figur gezeigte - ATR-Bild normalerweise nicht auf einem Display für den Benutzer sichtbar dargestellt wird sondern direkt über eine Bildverarbeitung ausgewertet wird].

Als Alternative zum klassischen ATR, wobei ein retroreflektierendes Ziel mit z.B. infraroten Laserstrahlen beleuchtetet wird und die Lage eines zurückgeworfenen Reflexes im anhand eines - insbesondere nur - im entsprechenden Wellenlängenbereich sensitiven flächenhaften Detektors aufgenommenen ATR-Bilds bestimmt wird, kann auch eine im sichtbaren Spektralbereich arbeitende digitale Kamera vorgesehen sein, mit der aus dem Sichtfeld der Zielobjekteinheit 12 Kamerabilder aufgenommen und Positionsveränderungen eines als Zielobjekt erkannten Musters im Kamerabild als Grundlage für eine Bestimmung von Positionsveränderungen bzw. Bewegungen, basierend auf sequentiell aufgenommenen Bildern, dienen. Das erzeugen des Ablagesignals kann erfindungsgemäss also auch darauf beruhen, dass in einer Kontrolleinheit 7 abgespeicherte Zielmarkenmuster in Übereinstimmung mit dem im Kamerabild aufgenommenen Zielobjekt gebracht werden, aufgenommen mit einer Kamera als der flächenhafte photosensitive Detektor des Vermessungsgeräts 11. Diese Vorgehensweise ist analog in der europäischen Patentanmeldung mit der Anmeldenummer EP 10168771.3 genauer beschrieben.

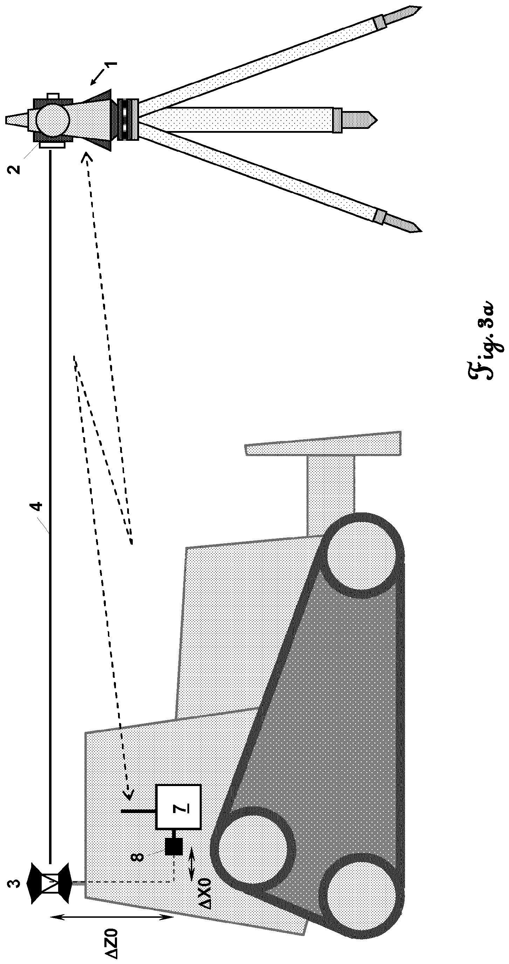

Figur 3a illustriert eine erste Ausführungsform eines erfindungsgemässen Vermessungssystems. Eine Totalstation 1 mit einer Anzieleinrichtung 2, ausgestattet mit einer Lichtquelle zur Aussendung eines Laserstrahls 4 auf ein anzuvisierendes Zielobjekt 3, ist bereitgestellt. Als Zielobjekt 3 ist ein Reflektor auf einer Baumaschine bzw. einem Baufahrzeug montiert. Von der Totalstation 1 aus werden kontinuierlich erste Messdaten bzgl. der relativen Position des Zielobjekts zur Totalstation (also in Bezug zu einem inneren Koordinatensystem der Totalstation) erzeugt, wobei Winkel- und Distanzmessungen zur Position des Zielobjekts (Reflektor) durchgeführt werden und jeweils ein Ablage-Signal erfasst wird, beispielsweise in Zeitintervallen in einer Grössenordnung von 1-20 Hz.

Ein Trägheitsmesssystem 8 als zweite Einheit zur Bereitstellung der unabhängig von der Totalstation arbeitenden Funktionalität zur Bestimmung von äusseren Positionen und/oder Bewegungen des Zielobjekts 3 sowie eine Kontrolleinheit 7 sind im Innern der Baumaschine bzw. des Baufahrzeugs untergebracht. Typischerweise umfasst das Trägheitsmesssystem 8 eine Kombination von drei Beschleunigungsmessern, welche Beschleunigungen in drei orthogonalen Richtungen bzw. Achsen bestimmen, und von drei Gyroskopen, mit denen Winkelgeschwindigkeiten bzw. Drehungen bezüglich der drei orthogonalen Achsen bestimmt werden. Der Versatz <ΔX0, ΔY0, ΔZ0> zwischen der Position des Trägheitsmesssystems 8 und des Zielobjekts 3 im Koordinatensystem des Trägheitsmesssystems 8 kann dabei aus einer separaten Kalibrationsmessung bereits bekannt sein oder im Verlauf der Arbeiten noch "on the fly" bestimmt werden, worauf später nochmals näher eingegangen wird.

Wenn objektseitig Sensoren bereitgestellt sind, welche die Ausrichtung der Maschine bzw. des Baufahrzeugs oder eines Stabs, auf welchem das Zielobjekt 3 angebracht ist, bestimmen, so müssen diese Sensoren nicht notwendigerweise nahe am Zielobjekt angebracht sein, sondern können auch in einem bestimmten Versatz <ΔX0, ΔY0, ΔZ0> zum Zielobjekt 3 positioniert sein. Als Sensoren eignen sich insbesondere auf MEMS basierte Trägheitsmesssysteme, jedoch auch (zusätzlich oder alternativ) Neigungssensoren, magnetische elektronische Kompasse, etc.

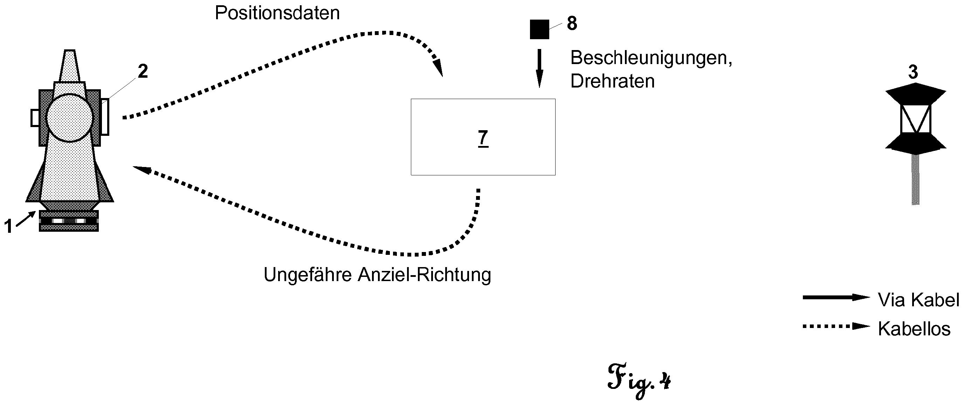

Die Messwerte des Trägheitsmesssystems 8 werden typischerweise mit einer Messrate von 50-500 Hz oder noch höherer Frequenz erfasst und generiert und beispielsweise per Kabel oder per kabelloser Datenübertragung an die im Baufahrzeug untergebrachte Kontrolleinheit 7 weitergeleitet. Gleichzeitig vermisst die Totalstation 1 kontinuierlich das Zielobjekt 3, z.B. ausgebildet als Reflektor, und generiert dabei anhand von Entfernungs- und Winkelmessungen zum Zielobjekt 3 bzw. anhand von fortlaufend aufgenommenen ATR-Bildern erste Messdaten beispielsweise mit einer Frequenz von 10 Hz. Diese Messdaten werden beispielsweise drahtlos, z.B. mittels Radiowellen, an die Kontrolleinheit 7 übermittelt (siehe auch Figur 4). Die mit dem Trägheitsmesssystem 8 gemessenen Werte von Beschleunigungen und Winkel- bzw. Drehgeschwindigkeiten (als zweite Messdaten) und die mit der Totalstation 1 bestimmten Daten über die Position des Zielobjekts 3 (als erste Messdaten) sowie - falls bereits verfügbar und abgespeichert - der Positionsversatz <ΔX0, ΔY0, ΔZ0> zwischen Trägheitsmesssystem 8 und Zielobjekt 3 werden mittels Auswertemitteln, welche einen Algorithmus, insbesondere einen Kalman-Filter, umfassen, miteinander kombiniert und abgeglichen (also aggregiert). Dabei werden von der Kontrolleinheit 7 Schätzwerte für die Position und die Bewegungsgeschwindigkeit des Zielobjekts 3 sowie die Ausrichtungswinkel des Trägheitsmesssystems, bezogen auf das Koordinatensystem der Totalstation 1, berechnet.

Basierend auf diesen Schätzwerten, welche kontinuierlich aus der Kombination der ersten und zweiten Messdaten berechnet werden, werden Korrekturwinkeldaten für die Ausrichtung der Anzieleinrichtung 2 bezüglich des Zielobjekts 3 berechnet und von der Kontrolleinheit 7 an die Totalstation 1 übermittelt. Basierend auf diesen Korrekturvorgaben werden die Motorantriebe für die Ausrichtung der Anzieleinrichtung 2 angesteuert, um die Anzielrichtung zum Zielobjekt 3 fortlaufend beizubehalten oder im Bedarfsfall erfolgten Bewegungen des Zielobjekts 3, bei denen dieses gegebenenfalls auch kurzfristig aus dem Sichtfeld der Anzieleinrichtung 2 verschwunden ist, nachzuführen, wodurch die optische Zielverfolgung von der Totalstation 1 aus dann wieder ermöglicht wird.

Auf diese Weise kann eine wesentlich stabilere Zielverfolgung als mit den Vorrichtungen und Verfahren, die aus dem Stand der Technik bekannt sind, gewährleistet werden. Dieses beruht vor allem auf der Tatsache, dass die anhand der zweiten Einheit erfolgenden Messungen zur Bestimmung einer Bewegung des Zielobjekts 3 nicht erst zum Zeitpunkt des Verlusts des optischen Kontakts zwischen Totalstation 1 und Zielobjekt 3 herangezogen werden, sondern kontinuierlich zum Nachführen der Zieleinrichtung 2 mit verwendet werden. Durch eine auf den bestimmten Schätzwerten beruhende, gegebenenfalls schnelle, Nachführung der Ausrichtung der Anzieleinrichtung 2 kann vorteilhaft auch oft ein Verlust des optischen Kontakts von vornherein vermieden werden.

Zudem kann anhand des Algorithmus, insbesondere des Kalman-Filters, auch der Versatz <ΔX0, ΔY0, ΔZ0> zwischen der Position des Trägheitsmesssystems 8 und des Zielobjekts 3 im Koordinatensystem des Trägheitsmesssystems 8 (etwa in einer Einschwingphase bis dieser stabil ist) erst noch ermittelt werden oder die dafür gespeicherten Werte überprüft, erneut ermittelt und ggf. als Korrekturen angebracht werden. Anders ausgedrückt können also neben der Position des Reflektors im Kalman Filter auch die Offsets <ΔX0, ΔY0, ΔZ0> oder Parameter der IMU (z.B. Bias) bestimmt und als Korrekturen angebracht werden.

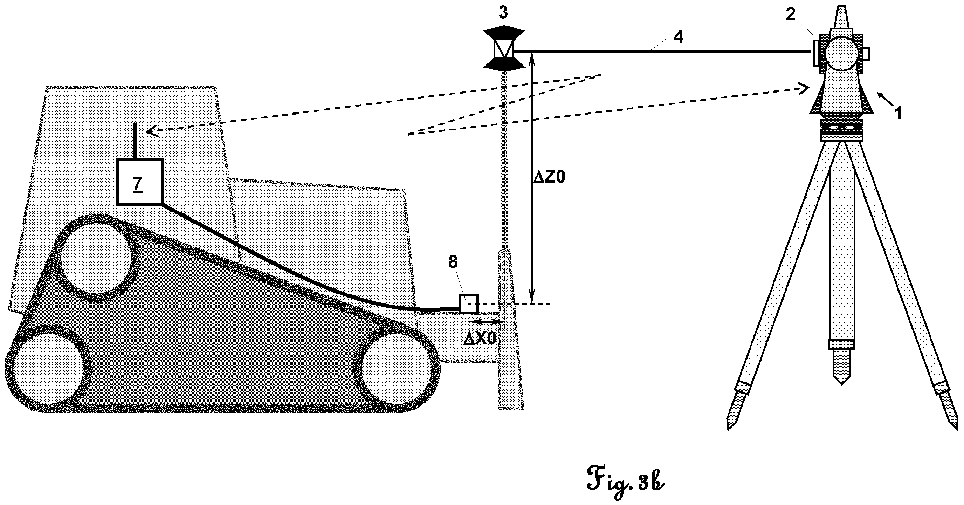

Figur 3b zeigt eine ähnliche Ausführungsform des erfindungsgemässen Vermessungssystems wie Figur 3a. In diesem Ausführungsbeispiel ist der das Zielobjekt bildende Retro-Reflektor an der Schaufel oder dem Schild eines Baufahrzeugs angebracht. Wie Figuren 3a und 3b in Zusammenschau illustrieren, kann sich die Kontrolleinheit 7 körperlich integriert in der Baumaschine, integriert in der ersten Einheit (also z.B. dem TPS), oder in einem eigenen separaten externen Gehäuse befinden, jedoch kann die Kontrolleinheit auch aus körperlich verstreuten Teilen, die jeweils in verschiedenen Komponenten des Systems untergebracht, datenmässig verbunden sind und lediglich funktional zusammenwirken, aufgebaut sein.

Figur 4 illustriert in noch detaillierter Weise den Datenfluss zwischen der Kontrolleinheit 7 und den verschiedenen Messeinrichtungen (Trägheitsmesssystem 8 als zweite Einheit und der Totalstation 1 als erste Einheit). Verdrahtete Datenverbindungen (in diesem Beispiel zwischen Kontrolleinheit 7 und Trägheitsmesssystem 8) sind durch durchgezogene Linien, drahtlose Verbindungen (zwischen Kontrolleinheit 7 und Totalstation 1) durch punktierte Linien angedeutet. Selbstverständlich ist die Art der Datenverbindung rein beispielhaft und kann z. B. auch vollständig drahtlos erfolgen.

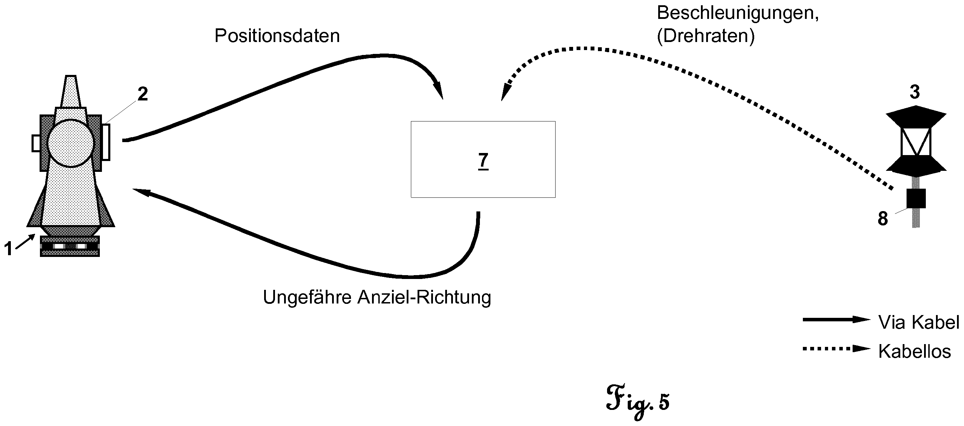

Figur 5 zeigt ein zweites Ausführungsbeispiel eines erfindungsgemässen Vermessungssystems, welches sich von den Beispielen gemäss Figuren 3a und 3b im Wesentlichen darin unterscheidet, dass ein Trägheitsmesssystem 8 nicht in einem Baufahrzeug, sondern benachbart zum Zielobjekt 3, beispielsweise einem Reflektor, angebracht ist. Der Abstand zwischen Trägheitsmesssystem 8 und Zielobjekt 3 kann dadurch klein, beispielsweise in einer Grössenordnung von 10 cm, gehalten werden, so dass ein Positionsversatz <ΔX0, ΔY0, ΔZ0> zwischen Trägheitsmesssystem 8 und Zielobjekt 3 im Wesentlichen vernachlässigbar ist. Gemäss Figur 5 ist die Kontrolleinheit 7 beispielsweise in der Totalstation 1 integriert, und die Messdaten des Trägheitsmesssystems 8 werden beispielsweise drahtlos, z. B. über Radiowellen, an die Kontrolleinheit 7 übermittelt. In diesem Beispiel ist die Kontrolleinheit 7 beispielsweise fest mit der Totalstation 1 verdrahtet. Die weiteren technischen Funktionalitäten gemäss diesem zweiten Ausführungsbeispiel entsprechen denjenigen wie zu Figur 3 beschrieben.

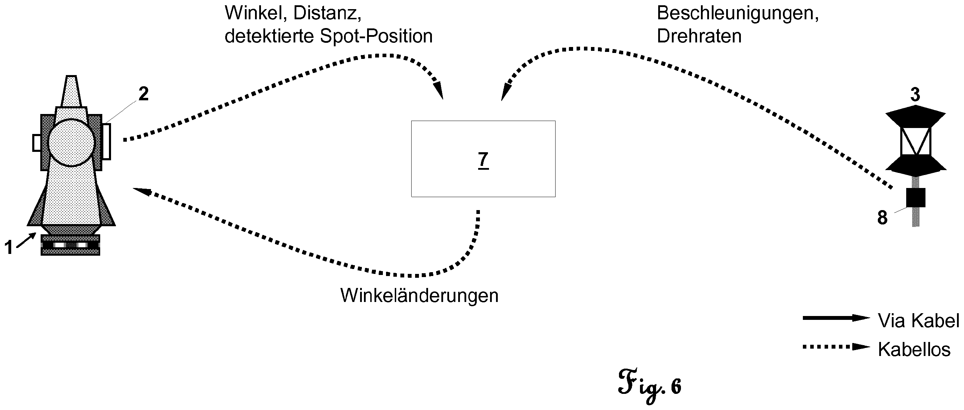

Figur 6 illustriert ein zu Figur 5 weitgehend analoges Ausführungsbeispiel mit dem Unterschied zu der Ausführungsform gemäss Figur 5, dass die Kontrolleinheit 7 in einem Baufahrzeug untergebracht ist und der Datentransfer zur Kontrolleinheit 7 ausschliesslich drahtlos erfolgt.

Als weiterer Unterschied zu Figur 5 werden im hier gezeigten Beispiel von der ersten Einheit 2 - anstelle der gemäss Figur 5 bereits seitens der ersten Einheit 2 aus den rohen Sensor-Daten ermittelten Positionsdaten - direkt die Rohdaten der Sensoren (wie etwa Winkel, Distanz und Spot-Position) an die Kontrolleinheit 7 übermittelt und dort weiterverarbeitet und mit den zweiten Messdaten der zweiten Einheit (wie Beschleunigungen, Drehraten) verheiratet.

Des Weiteren wird im hier beispielhaft illustrierten Fall nicht die aus den verheirateten Daten abgeleitete ungefähre Anziel-Richtung an das Vermessungsgerät übertragen, sondern die ferner daraus ermittelten Steuersignale für die Motorisierung der ersten Einheit, welche ein Nachführen der Zielachse auf das Zielobjekt bewirken.

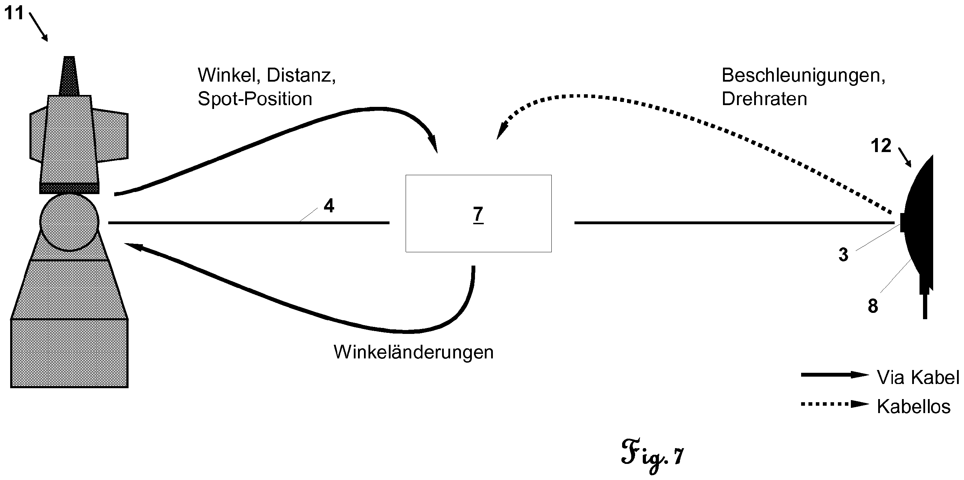

Figur 7 illustriert eine Ausführungsform eines erfindungsgemässen geodätischen Vermessungssystems, bei dem ein Trägheitsmesssystem 8 integriert ist in eine Zielobjekteinheit 12, deren aktuelle Position bzw.

Positionsänderungen von einem hier beispielsweise als Laser-Tracker ausgebildeten Vermessungsgerät 11 zur Zielverfolgung bestimmt bzw. verfolgt werden. Die Zielobjekteinheit 12 kann als handhaltbare Touch-Probe oder Laser-Scann-Einheit ausgestattet sein mit einem Reflektor als Zielobjekt 3 zur Reflexion von (Laser-)Licht, welches vom Laser-Tracker 11 ausgesandt wird.

Typischerweise ist dabei der Laser-Tracker 11 - zur Erfassung einer Ablage der tatsächlichen Ausrichtung der Zielachse von einem das Zielobjekt genau anvisierenden Zustand - mit einer Lichtquelle zur Aussendung eines Laserstrahls 4 in einer bestimmten Richtung und einem vorzugsweise ortsauflösenden, z.B. flächenhaft ausgebildeten, Detektor zum Empfang von Laserlicht, das vom Zielobjekt 3 reflektiert wird, ausgestattet. Anhand dieses Detektors kann dann das Ablage-Signal erzeugt werden.

Der Laser-Tracker 11 ermittelt also in ähnlicher Weise, wie vorangehend zu den anderen Ausführungsbeispielen eines erfindungsgemässen geodätischen Vermessungssystems beschrieben, Winkelausrichtung, eine Ablage vom genau anvisierten Zustand sowie insbesondere eine Distanz bezüglich des Zielobjekts 3, beispielsweise mit einer Messrate in der Grössenordnung von 10 Hz - 100 Hz. Eine Kontrolleinheit 7 kann beispielsweise im Laser-Tracker 11 integriert sein und damit drahtverbunden Daten zur optischen Positionsbestimmung des Zielobjekts und Steuer-Signale zur Änderung der Ausrichtung der Zielachse kommunizieren. Diese Steuer-Signale werden von der Kontrolleinheit 7 u.a. basierend auf beispielsweise drahtlos von dem Trägheitsmesssystem 8 empfangenen Messdaten über Bewegungen und Bewegungsänderungen der Zielobjekteinheit 12, erfasst mit einer Messrate von z.B. 100 Hz - 500 Hz (oder auch schneller), bestimmt.

Näher beschrieben werden also die mit dem Trägheitsmesssystem 8 gemessenen Werte von Beschleunigungen und Winkel- bzw. Drehgeschwindigkeiten (als zweite Messdaten) und die mit dem Laser-Tracker 11 bestimmten Daten über die Position des Zielobjekts 3 (als erste Messdaten) mittels Auswertemitteln, welche einen Algorithmus, insbesondere einen Kalman-Filter, umfassen, miteinander kombiniert und abgeglichen (d.h. aggregiert). Dabei werden von der Kontrolleinheit 7 Schätzwerte für die Position und die Bewegungsgeschwindigkeit des Zielobjekts 3 sowie die Ausrichtungswinkel des Trägheitsmesssystems 8, bezogen auf das Koordinatensystem des Laser-Trackers 11, berechnet.

Basierend auf diesen Schätzwerten, welche kontinuierlich aus der Kombination von optischer Positionsbestimmung und durch die zweite Einheit erfolgende Eigenorts- bzw. Eigenbewegungsbestimmung berechnet werden, wird das Steuer-Signal mit Korrekturwinkeln für die Ausrichtung der Zielachse bezüglich des Zielobjekts 3 im Rahmen des Verfolgungs-Modus berechnet und dem Laser-Tracker 11 zur Verfügung gestellt. Basierend auf diesen Steuer-Signalen werden Motorantriebe für die Ausrichtung der Zielachse angesteuert, um die Anzielrichtung derart zu ändern, dass das Zielobjekt 3 fortlaufend anvisiert bleibt. Im Bedarfsfall kann somit auch bei entsprechend ruckartigen, weit versetzenden Bewegungen des Zielobjekts 3, bei welchen dieses gegebenenfalls auch kurzfristig aus dem Sichtfeld des flächenhaften, das Ablage-Signal bereitstellenden Detektors des Laser-Trackers 11 verschwindet, die Zielachse derart rasch auf das Ziel nachgeführt werden, dass die Verfolgung des Ziels stabil weiterläuft. Die motorisierte Strahlnachführung basierend auf den berechneten Schätzwerten ermöglicht insbesondere auch die Vermeidung von Verzögerungsproblemen, beispielsweise basierend auf der Zeit für Berechnung der Steuer-Daten (insbesondere Winkelkorrekturwerten oder Winkelstellwerten) durch die Kontrolleinheit 7 und den Daten- bzw. Kommandotransfer an die Stell-Motoren des Laser-Trackers 11.

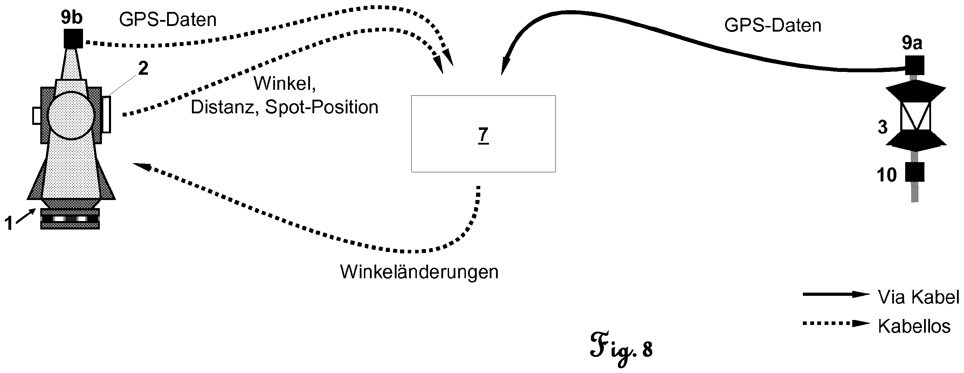

Figur 8 illustriert eine weitere Ausführungsform eines erfindungsgemässen Vermessungssystems, bei der die Realisierung der durch die zweite Einheit bereitgestellten Funktionalität zur fortlaufenden Bestimmung von Bewegungen und/oder Positionen des Zielobjekts mit Bezug zu einem äusseren Koordinatensystem auf der Verwendung eines globalen Satellitennavigationssystems ("GNSS", insbesondere das von den USA betriebene "GPS" - Global Positioning System) beruht.

Ein GNSS-Modul 9a mit GNSS-Antenne ist nahe bei einem Reflektor als Zielobjekt 3 angebracht. Zusätzlich können ausserdem ein Neigungssensor, insbesondere ein Zwei-Achsen-Neigungssensor 10, und/oder ein Magnetkompass benachbart zum Zielobjekt 3 montiert sein. Ein Positionsversatz <ΔX0, ΔY0, ΔZ0> zwischen dem GNSS-Modul 9a und dem Zielobjekt 3 ist beispielsweise aus einer Kalibrationsmessung bekannt oder kann anhand der Algorithmus "on the fly" noch nachträglich abgeleitet werden. Mittels des Zwei-Achsen-Neigungssensors 10 kann aber auch kontinuierlich der Positionsversatz zwischen dem GNSS-Modul 9a und dem Zielobjekt 3 verfolgt werden. Im Fall eines nur geringfügigen Versatzes und/oder relativ niedrigen Anforderungen an die Messgenauigkeit können die Messwerte des Zwei-Achsen-Neigungssensors 10 gegebenenfalls vernachlässigt werden.

Zielobjekt 3, GNSS-Modul 9a und Zwei-Achsen-Neigungssensor 10 können beispielsweise an einer Baumaschine bzw. einem Baufahrzeug angebracht sein, und eine Kontrolleinheit 7 kann im Innern der Baumaschine bzw. des Baufahrzeugs untergebracht sein. In einem solchen Fall werden die Messwerte des GNSS-Moduls 9a und des Zwei-Achsen-Neigungssensors 10 (als zweite Messdaten) beispielsweise per Kabel, angedeutet durch eine durchgezogene Linie, an die Kontrolleinheit 7 übermittelt. Selbstverständlich ist ein drahtloser Datentransfer auch möglich.

Gleichzeitig werden von der die erste Einheit darstellende Totalstation 1 kontinuierlich der horizontale Winkel, der vertikale Winkel, ein Ablagesignal sowie insbesondere die Entfernung zum Zielobjekt 3 ermittelt (als erste Messdaten), in analoger Weise wie in den vorangehenden Ausführungsbeispielen anhand der Figuren 3 bis 7 beschrieben. Die Totalstation 1 kommuniziert mit der Kontrolleinheit 7 beispielsweise drahtlos, z. B. über Radiowellen.

Wie vorangehend anhand von Figur 2a bereits erläutert, können Abweichungen <Δx, Δy> der Position eines Reflexflecks 6 eines von der Totalstation 1 ausgesandten und von Zielobjekt 3 reflektierten Laserstrahls 4 von einer Soll-Position 5 auf dem ATR-Sensor (bzw. dem vom ATR-Sensor erfassten Bild) bestimmt, daraus Korrekturwinkel für die Ausrichtung einer Anzieleinrichtung 2 der Totalstation 1 berechnet und entsprechende Korrekturen mit angesteuerten Stellmotoren vollzogen werden, bis Reflexfleck 6 und Soll-Position 5 miteinander übereinstimmen, d.h. die Horizontal- und Vertikalwinkel der Visier- bzw. Anzieleinrichtung werden derart iterativ geändert und angepasst, bis das Zentrum des Reflexflecks 6 mit der Soll-Position 5 auf einem Detektor bzw. Flächensensor der Anzieleinrichtung 2 zusammenfällt.

Die anhand der Totalstation 1 bestimmten ersten Messdaten können dann von der Kontrolleinheit 7 mittels eines Algorithmus, insbesondere eines Kalman-Filters, kombiniert werden mit den zweiten Messdaten (also Positions- und Geschwindigkeits-Messdaten des GNSS-Moduls 9a und Messdaten des Zwei-Achsen-Neigungssensors 10), insbesondere unter Berücksichtigung des bekannten Positionsversatzes <ΔX0, ΔY0, ΔZ0> zwischen dem GNSS-Modul 9a und dem Zielobjekt 3, und für eine stabile Verfolgung des Zielobjekts 3 herangezogen werden.

Insbesondere werden die ersten und zweiten Messdaten jeweils über einen bestimmten zurückliegenden Zeitraum hinweg akkumuliert und basierend auf ein Kombinieren und Vergleichen der akkumulierten Daten eine Prädiktion hinsichtlich einer zu erwartenden nah-zukünftigen Position und/oder Bewegung des Zielobjekts durchgeführt.

Das Ableiten des Steuersignals für die Zielverfolgung kann dann zusätzlich unter Berücksichtigung dieser Prädiktion erfolgen. Dieser Umstand kann nützlich sein, um z.B. Latenzprobleme (etwa bedingt durch Datenübermittlung, Berechnung, etc.) zu verringern.

Die berechneten (d.h. im speziellen Fall der Prädiktion auch geschätzten oder zu erwartenden) Positionsdaten können jedoch zudem auch verwendet werden zur Führung bzw.

Steuerung oder Kontrolle der Baumaschine bzw. des Baufahrzeugs.

Gemäss eines weiteren Aspekts der Erfindung kann dabei auch die die erste Einheit bildende Totalstation 1 zusätzlich mit einem GNSS-Sensor 9b ausgestattet sein. Durch die Verwendung zweier GNSS-Sensoren 9a, 9b wird - in dem Fachmann bekannter Weise - eine differentielle Datenverarbeitung ermöglicht, womit die Genauigkeit einer Positions- und/oder Geschwindigkeitsbestimmung erhöht wird.

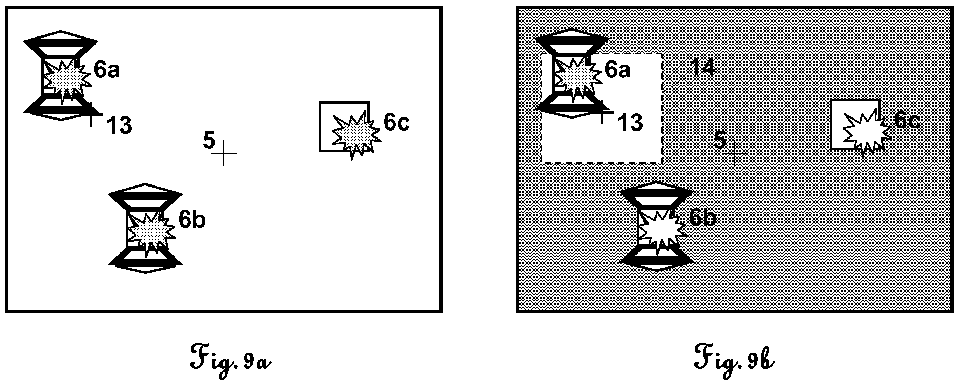

Die Figuren 9a und 9b illustrieren Funktionalitäten, die mit den vorangehend beschriebenen Ausführungsbeispielen eines erfindungsgemässen geodätischen Vermessungssystems und zugehörigen Vermessungsverfahrens kombinierbar sind.

Figur 9a illustriert eine Situation, bei der mehrere Reflexflecken 6a, 6b, 6c des ausgesandten Laserstrahls 4 vom ATR-Detektor der Anzieleinrichtung 2 erfasst und zur weiteren Auswertung hinsichtlich einer Ablage der Reflexe von der Soll-Position 5 durch eine Bildverarbeitung herangezogen werden. Beispielsweise stammen ein Reflexfleck 6a von dem zu verfolgenden Zielobjekt 3, ein Reflexfleck 6b von einem zweiten z.B. als Reflektor ausgebildeten Zielobjekt, das auf einem weiteren, die Anzielrichtung der Anzieleinrichtung 2 kreuzenden, Baufahrzeug montiert ist, und ein Reflexfleck 6c von einem anderen reflektierenden Objekt, z.B. einem Fahrzeugscheinwerfer oder einem reflektierenden Kleidungsstück. Andere Gründe für eine Erfassung mehrerer Reflexflecken können beispielsweise ungünstige Umgebungsbedingungen wie Regen sein, welche zu einer Streuung der Reflexionen führen.

In einer Situation gemäss Figur 9a, bei der mehrere Reflexflecken 6a, 6b, 6c des ausgesandten Laserstrahls 4 vom Detektor der Anzieleinrichtung 2 erfasst und zur weiteren Auswertung hinsichtlich einer Ablage von der Soll-Position 5 herangezogen werden, wird ein tatsächlich zu identifizierende Reflexfleck 6a zur Verfolgung des Zielobjekts 3 bestimmt wie nachfolgend beschrieben. Eine aus den Einstelldaten für die motorgesteuerte Ausrichtung der Anzieleinrichtung 2 der Totalstation bestimmte Ausrichtung der optischen Zielachse wird als erwarteter Auftreffpunkt 13 eines Reflexfleckens auf dem Detektor vorgemerkt, und der Abstand zu allen erfassten Reflexflecken 6a, 6b, 6c wird berechnet. Der dem eingeblendeten erwarteten Auftreffpunkt 13 nächstgelegene Reflexfleck wird als Reflexfleck von dem zu verfolgenden Zielobjekt 3 identifiziert. Nachfolgend kann die Zielverfolgungsfunktionalität in analoger Weise wie vorangehend beschrieben fortgesetzt werden.

Alternativ kann, wie in Figur 9b illustriert, eine Zielverfolgung gemäss eines von einem Systembediener zu definierenden Bildausschnitts 14, mit dem eine entsprechende Einschränkung der Zielverfolgung auf den bildausschnittsdefinierten Bereich festgelegt wird, erfolgen. Dann wird nur der innerhalb dieses definierten Bildausschnitts 14 befindliche Reflexfleck 6a weiter verfolgt, und die Positionen der Reflexflecken 6b, 6c werden nicht weiter berücksichtigt. Diese erfindungsgemässe Variante zur Erfüllung einer Zielverfolgungsfunktionalität verbessert weiter die Robustheit gegenüber Störungen. Zusätzlich wird durch die Einschränkung auf nur einen Bildausschnitt 14 im ATR-Bild der Zeitaufwand für Bildverarbeitung reduziert.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Analog zu den obigen Beschreibungen hinsichtlich der verbesserten Verfolgung eines Zielobjekts kann der Kerngedanke der Erfindung auch dazu genutzt werden, dass ein Vermessungsgerät (als erste Einheit) zwei Ziele (z.B. Reflektoren) abwechselnd verfolgt. Dafür können z.B. eine IMU (als zweite Einheit) an zwei Reflektoren gekoppelt sein (die auch gegenseitig miteinander starr verbunden sind) oder jeweils eine eigene IMU für jeden eigenständigen Reflektor (also insgesamt mehrere zweite Einheiten bzw. jeweils eine zweite Einheit pro Zielobjekt) eingesetzt werden und jeweils parallel mehrere Algorithmen (je ein Algorithmus für jedes Zielobjekt) ablaufen (wobei die Pausen für das Füttern des Algorithmus mit den ersten Messdaten jeweils gegenseitig abwechseln können).

## Patentansprüche

1. Vermessungssystem zur Vermessung und Verfolgung eines beweglichen, einen Zielpunkt definierenden Zielobjekts (3), aufweisend
• ein eine erste Einheit darstellendes Vermessungsgerät (1, 11), insbesondere ausgebildet als Theodolit, Totalstation oder Laser-Tracker, mit Positionsbestimmungsfunktionalität zur Bestimmung der Position des Zielpunkts mit Bezug zu einem inneren Koordinatensystem, wobei das Vermessungsgerät (1, 11) dafür aufweist
□ eine Basis,
□ eine eine Zielachse definierende Anzieleinrichtung, wobei die Ausrichtung der Zielachse zur hochpräzisen Anvisierung und Verfolgung des Zielpunkts motorisiert gegenüber der Basis veränderbar ist,
□ einen photosensitiven flächenhaften Detektor zur fortlaufenden Erzeugung eines jeweils aktuellen Ablage-Signals, das direkt von einer Richtung und einem Ausmass einer Abweichung zwischen einer jeweils aktuellen, tatsächlichen Ausrichtung der Zielachse und einer fiktiven, den Zielpunkt hochpräzise anvisierten Ausrichtung der Zielachse abhängt,
□ Winkelmessfunktionalität zur fortlaufenden hochpräzisen Erfassung der aktuellen Ausrichtung der Zielachse, und
□ Distanzmessfunktionalität zur fortlaufenden Bestimmung der jeweils aktuellen Entfernung zum Zielpunkt,
• eine zielobjektseitig vorgesehene, zweite Einheit zur Bereitstellung einer von der Positionsbestimmungsfunktionalität der ersten Einheit unabhängigen Funktionalität zur fortlaufenden Bestimmung von Bewegungen und/oder Positionen des Zielobjekts (3) mit Bezug zu einem äusseren Koordinatensystem,
und
• eine mit der ersten und zweiten Einheit datenmässig verbundene Kontrolleinheit (7) mit Auswerte-, Datenverarbeitungs- und Steuerungsfunktionalität,
**dadurch gekennzeichnet, dass**
das Vermessungssystem einen Zielpunkt-Verfolgungsmodus aufweist, und die Kontrolleinheit so konfiguriert ist, dass in im Rahmen des Zielpunkt-Verfolgungsmodus automatisch gesteuert durch die Kontrolleinheit (7) entsprechend einem vordefinierten Algorithmus, insbesondere mithilfe eines Kalman-Filters,
• seitens der ersten Einheit jeweils aktuell generierte erste Messdaten, die zumindest abhängig sind von
□ der jeweils aktuellen Ausrichtung der Zielachse und
□ dem jeweils aktuellen Ablage-Signal,
sowie
• seitens der zweiten Einheit jeweils aktuell generierte zweite Messdaten, die abhängig sind von den jeweils aktuell erfassten Bewegungen und/oder Positionen des Zielobjekts (3),
fortlaufend kombiniert und abgeglichen werden und basierend darauf ein Steuersignal abgeleitet wird zur fortlaufenden automatischen motorisierten Änderung der Ausrichtung der Zielachse derart, dass durch die Zielachse fortlaufend der Zielpunkt anvisiert wird.

2. Vermessungssystem nach Anspruch 1,
**dadurch gekennzeichnet, dass**
• die erste Einheit zur Generierung der ersten Messdaten mit einer ersten Rate, insbesondere etwa zwischen 1 und 20Hz, und die zweite Einheit zur Generierung der zweiten Messdaten mit einer zweiten Rate, insbesondere etwa zwischen 50 und 500Hz, ausgebildet sind, wobei die zweite Rate höher ist als die erste Rate, und
• im Rahmen des Zielpunkt-Verfolgungsmodus der vordefinierte Algorithmus mit einer dritten Rate, die höher ist als die erste Rate und insbesondere der zweiten Rate entspricht, getaktet ist.

3. Vermessungssystem nach Anspruch 2,
**dadurch gekennzeichnet, dass**
im Rahmen des Zielpunkt-Verfolgungsmodus das Steuersignal mit einer vierten Rate, die höher ist als die erste Rate und insbesondere der dritten Rate entspricht, abgeleitet wird und eine fortlaufende automatische motorisierte Änderung der Ausrichtung der Zielachse anhand des Steuersignals erfolgt.

4. Vermessungssystem nach einem der Ansprüche 1 bis 3,
**dadurch gekennzeichnet, dass**
im Rahmen des Zielpunkt-Verfolgungsmodus automatisch gesteuert durch die Kontrolleinheit (7) die ersten und zweiten Messdaten jeweils über einen bestimmten zurückliegenden Zeitraum hinweg akkumuliert werden und basierend darauf anhand des Algorithmus eine Prädiktion hinsichtlich einer nah-zukünftigen Position und/oder Bewegung des Zielobjekts erfolgt und das Steuersignal zusätzlich unter Berücksichtigung dieser Prädiktion abgeleitet wird.

5. Vermessungssystem nach einem der Ansprüche 1 bis 4,
**dadurch gekennzeichnet, dass**
die zweite Einheit ein Trägheits-Messsystem (8) aufweist, insbesondere mit auf MEMS basierten Beschleunigungssensoren und Drehratensensoren, im Speziellen jeweils in drei Achsen.

6. Vermessungssystem nach einem der Ansprüche 1 bis 5,
**dadurch gekennzeichnet, dass**
die zweite Einheit ein GNSS-Modul (9a) mit GNSS-Antenne aufweist.

7. Vermessungssystem nach einem der Ansprüche 1 bis 6,
**dadurch gekennzeichnet, dass**
die zweite Einheit zur Anbringung in starrer Verbundenheit mit dem Zielobjekt (3) vorgesehen ist.

8. Vermessungssystem nach einem der Ansprüche 1 bis 7,
**dadurch gekennzeichnet, dass**
das Vermessungsgerät (1, 11) eine geringfügig divergente Lichtstrahlen in Richtung der Zielachse emittierende Lichtquelle, insbesondere einen Laser, zur Beleuchtung eines das Zielobjekt (3) darstellenden Retroreflektors aufweist.

9. Vermessungsverfahren zur Vermessung und Verfolgung eines beweglichen, einen Zielpunkt definierenden Zielobjekts (3), unter Verwendung der ersten und der zweiten Einheit nach einem der Ansprüche 1 bis 8, mit
• einem fortlaufendem Generieren von ersten Messdaten anhand der ersten Einheit, die zumindest abhängig sind von
□ der jeweils aktuellen Ausrichtung der Zielachse und
□ dem jeweils aktuellen Ablage-Signal,
• einem fortlaufendem Generieren von zweiten Messdaten anhand der zweiten Einheit, die abhängig sind von den jeweils aktuell erfassten Bewegungen und/oder Positionen des Zielobjekts (3),
• einem fortlaufendem Kombinieren und Abgleichen, insbesondere auch Akkumulieren, der ersten und zweiten Messdaten unter Anwenden eines vordefinierten Algorithmus, insbesondere eines Kalman-Filters,
• einem basierend darauf erfolgendem Ableiten eines Steuersignals zur fortlaufenden automatischen motorisierten Änderung der Ausrichtung der Zielachse derart, dass durch die Zielachse fortlaufend der Zielpunkt anvisiert wird.

10. Vermessungsverfahren nach Anspruch 9,
**dadurch gekennzeichnet, dass**
• das Generieren der ersten Messdaten mit einer ersten Rate, insbesondere von etwa zwischen 1 und 20Hz, und das Generieren der zweiten Messdaten mit einer zweiten Rate, insbesondere von etwa zwischen 50 und 500Hz, erfolgt, wobei die zweite Rate höher ist als die erste Rate, und
• der vordefinierte Algorithmus mit einer dritten Rate, die höher ist als die erste Rate und insbesondere der zweiten Rate entspricht, getaktet ist und somit Ergebnisse aus dem Anwenden des Algorithmus mit der dritten Rate erhalten werden.

11. Vermessungsverfahren nach Anspruch 10,
**dadurch gekennzeichnet, dass**
• das Ableiten des Steuersignals mit einer vierten Rate, die höher ist als die erste Rate und insbesondere der dritten Rate entspricht, und
• ein fortlaufendes motorisiertes Ändern der Ausrichtung der Zielachse anhand des Steuersignals erfolgen.

12. Vermessungsverfahren nach einem der Ansprüche 9 bis 11,
**dadurch gekennzeichnet, dass**
unter Anwenden des Algorithmus
• die ersten und zweiten Messdaten jeweils über einen bestimmten zurückliegenden Zeitraum hinweg akkumuliert werden und
• basierend darauf ein Bestimmen einer Prädiktion hinsichtlich einer nah-zukünftigen Position und/oder Bewegung des Zielobjekts erfolgt,
sowie dass das Ableiten des Steuersignals zusätzlich unter Berücksichtigung dieser Prädiktion erfolgt.

13. Vermessungsverfahren nach Anspruch 12,
**dadurch gekennzeichnet, dass**
unter Anwenden des Algorithmus die über einen bestimmten zurückliegenden Zeitraum hinweg akkumulierten ersten und zweiten Messdaten für das Bestimmen der Prädiktion jeweils unterschiedlich gewichtet werden, wobei - in der Tendenz - für ferner zurückliegende Zeitpunkte generierte Daten weniger stark gewichtet werden als für näher zurückliegende Zeitpunkte generierte Daten der jeweils akkumulierten ersten und zweiten Messdaten.

14. Vermessungsverfahren nach Anspruch 12 oder 13,
**dadurch gekennzeichnet, dass**
• unter Anwenden des Algorithmus die über einen bestimmten zurückliegenden Zeitraum hinweg akkumulierten ersten und zweiten Messdaten durch gegenseitiges Vergleichen und insbesondere Regression auf Messfehler hin einzeln überprüft werden und
• für fehlerbehaftet befundene Daten der jeweils akkumulierten ersten und zweiten Messdaten für das Bestimmen der Prädiktion mit vergleichsweise geringer Gewichtung oder gar nicht berücksichtigt werden.

15. Computerprogrammprodukt mit Programmcode, der auf einem maschinenlesbaren Träger gespeichert ist, zur Durchführung
• des fortlaufenden Kombinierens und Abgleichens der ersten und zweiten Messdaten entsprechend des vordefinierten Algorithmus, welcher im Programmcode gespeichert ist, und
• des darauf basierenden Ableitens des Steuersignals des Vermessungsverfahrens nach einem der Ansprüche 9 bis 14, insbesondere wenn das Programm auf der Kontrolleinheit (7) des Vermessungssystems nach einem der Ansprüche 1 bis 8 ausgeführt wird.

## Claims

1. A surveying system for surveying and tracking a movable target object (3) that defines a target point, comprising
• a surveying device (1, 11), in particular designed as a theodolite, total station or laser tracker, which constitutes a first unit, with position determining functionality for determining the position of the target point with reference to an internal coordinate system, wherein the surveying device (1, 11) comprises for this purpose
□ a base,
□ a targeting device defining a target axis, wherein the alignment of the target axis is variable relative to the base in a motorized manner for highly precise sighting and tracking of the target point,
□ a photosensitive areal detector for continuously generating a respectively current offset signal directly dependent on a direction and an extent of a deviation between a respectively current, actual alignment of the target axis and a fictitious alignment of the target axis that is aimed highly precisely at the target point,
□ angle measuring functionality for continuously detecting highly precisely the current alignment of the target axis, and
□ distance measuring functionality for continuously determining the respectively current distance to the target point,
• a second unit, provided on the target object side, for providing a functionality for continuously determining movements and/or positions of the target object (3) with reference to an external coordinate system, said functionality being independent of the position determining functionality of the first unit,
and
• a supervisory unit (7) connected to the first and second units in terms of data and having evaluation, data processing and control functionality,
**characterized in that**
the surveying system has a target point tracking mode and the supervisory unit is configured that in the context of the target point tracking mode, in a manner automatically controlled by the supervisory unit (7) in accordance with a predefined algorithm, in particular with the aid of a Kalman filter,
• first measurement data respectively currently generated on the part of the first unit, said first measurement data being at least dependent on
□ the respectively current alignment of the target axis and
□ the respectively current offset signal,
and
• second measurement data respectively currently generated on the part of the second unit, said second measurement data being dependent on the respectively currently detected movements and/or positions of the target object (3),
are continuously combined and coordinated and, on the basis thereof, a control signal is derived for continuously automatically changing the alignment of the target axis in a motorized manner in such a way that the target point is continuously sighted by means of the target axis.

2. The surveying system as claimed in claim 1, **characterized in that**
• the first unit is configured for generating the first measurement data with a first rate, in particular approximately between 1 and 20Hz, and the second unit is configured for generating the second measurement data with a second rate, in particular approximately between 50 and 500Hz, wherein the second rate is higher than the first rate, and
• in the context of the target point tracking mode, the predefined algorithm is clocked with a third rate, which is higher than the first rate and, in particular, corresponds to the second rate.

3. The surveying system as claimed in claim 2,
**characterized in that**
in the context of the target point tracking mode, the control signal is derived with a fourth rate, which is higher than the first rate and, in particular, corresponds to the third rate, and the alignment of the target axis is continuously automatically changed in a motorized manner on the basis of the control signal.

4. The surveying system as claimed in any one of claims 1 to 3,
**characterized in that**
in the context of the target point tracking mode, in a manner automatically controlled by the supervisory unit (7), the first and second measurement data are accumulated in each case across a specific preceding time period and, on the basis thereof, with the aid of the algorithm, a prediction is made with regard to a near-future position and/or movement of the target object and the control signal is additionally derived taking account of this predication.

5. The surveying system as claimed in any one of claims 1 to 4,
**characterized in that**
the second unit has an inertial measurement system (8), in particular having MEMS-based acceleration sensors and rate-of-rotation sensors, specifically in each case in three axes.

6. The surveying system as claimed in any one of claims 1 to 5,
**characterized in that**
the second unit has a GNSS module (9a) having a GNSS antenna.

7. The surveying system as claimed in any one of claims 1 to 6,
**characterized in that**
the second unit is provided for fitting in a manner rigidly connected to the target object (3).

8. The surveying system as claimed in any one of claims 1 to 7,
**characterized in that**
the surveying device (1, 11) has a light source, in particular a laser, which emits slightly divergent light beams in the direction of the target axis, for illuminating a retroreflector that constitutes the target object (3).

9. A surveying method for surveying and tracking a movable target object (3) that defines a target point, using the first and second units as claimed in any one of claims 1 to 8, with
• a continuous generating of first measurement data with the aid of the first unit, said first measurement data being at least dependent on
□ the respectively current alignment of the target axis and
□ the respectively current offset signal,
• a continuous generating of second measurement data with the aid of the second unit, said second measurement data being dependent on the respectively currently detected movements and/or positions of the target object (3),
• a continuous combining and coordinating, in particular also accumulating, of the first and second measurement data using a predefined algorithm, in particular a Kalman filter,
• a deriving, on the basis thereof, of a control signal for continuously automatically changing the alignment of the target axis in a motorized manner in such a way that the target point is continuously sighted by means of the target axis.

10. The surveying method as claimed in claim 9,
**characterized in that**
• the first measurement data are generated with a first rate, in particular of approximately between 1 and 20Hz, and the second measurement data are generated with a second rate, in particular of approximately between 50 and 500 Hz, wherein the second rate is higher than the first rate, and
• the predefined algorithm is clocked with a third rate, which is higher than the first rate and, in particular, corresponds to the second rate, and results are thus obtained from the use of the algorithm with the third rate.

11. The surveying method as claimed in claim 10,
**characterized in that**
• the control signal is derived with a fourth rate, which is higher than the first rate and, in particular, corresponds to the third rate, and
• the alignment of the target axis is continuously changed in a motorized manner on the basis of the control signal.

12. The surveying method as claimed in any one of claims 9 to 11,
**characterized in that**
using the algorithm
• the first and second measurement data are accumulated in each case across a specific preceding time period and
• on the basis thereof a prediction is determined with regard to a near-future position and/or movement of the target object,
and **in that** the control signal is additionally derived taking account of said prediction.

13. The surveying method as claimed in claim 12,
**characterized in that**
using the algorithm the first and second measurement data accumulated across a specific preceding time period are weighted differently in each case for determining the prediction, wherein - as a tendency - data generated for more distant preceding times are weighted less highly than data generated for more recent preceding times from the respectively accumulated first and second measurement data.

14. The surveying method as claimed in claim 12 or 13,
**characterized in that**
• using the algorithm the first and second measurement data accumulated across a specific preceding time period are checked individually for measurement errors by mutual comparison and, in particular, regression and
• data found to be erroneous from the respectively accumulated first and second measurement data are taken into account with comparatively low weighting, or are not taken into account at all, for determining the prediction.

15. A computer program product comprising program code, stored on a machine-readable carrier, for carrying out
• the continuous combining and coordinating of the first and second measurement data in accordance with the predefined algorithm, which is stored in the program code, and
• the deriving, on the basis thereof, of the control signal of the surveying method as claimed in any one of claims 9 to 14, in particular when the program is executed on the supervisory unit (7) of the surveying system as claimed in any one of claims 1 to 8.

## Revendications

1. Système de mesure pour la mesure et le suivi d'un objet cible (3) mobile qui définit un point cible qui présente :
• un appareil de mesure (1, 11) qui représente une première unité, en particulier configuré comme un théodolite, une station totale ou un appareil de suivi laser, avec une fonctionnalité de détermination de position pour déterminer la position du point cible en référence à un système de coordonnées interne, cependant que l'appareil de mesure (1, 11) présente pour cela :
□ une base,
□ un dispositif de visée qui définit un axe de visée, cependant que l'alignement de la ligne de visée peut être varié par rapport à la base de manière motorisée pour la visée extrêmement précise et le suivi du point cible,
□ un détecteur plat photosensible pour la production en continu d'un signal d'enregistrement respectivement actuel qui dépend directement d'une direction et d'une mesure d'un écart entre un alignement effectif, respectivement actuel, de la ligne de visée et un alignement fictif de la ligne de visée qui cible le point cible de manière extrêmement précise,
□ une fonctionnalité de mesure d'angle pour la détection en continu extrêmement précise de l'alignement actuel de la ligne de visée et
□ une fonctionnalité de mesure de distance pour la détermination en continu de la distance respectivement actuelle par rapport au point cible,
• une seconde unité, prévue du côté de l'objet cible, pour la mise à disposition d'une fonctionnalité pour la détermination en continu de mouvements et/ou de positions de l'objet cible (3) en référence à un système de coordonnées extérieur indépendante de la fonctionnalité de détermination de position de la première unité
et
• une unité de contrôle (7) reliée sur le plan informatique à la première et à la seconde unité avec une fonctionnalité d'analyse, de traitement de données et de commande, **caractérisé en ce que** le système de mesure présente un mode de suivi de point cible et que l'unité de contrôle est configurée telle que
• des premières données de mesure, générées respectivement actuellement par la première unité, qui dépendent au moins de
□ l'alignement respectivement actuel de la ligne de visée et
□ du signal d'enregistrement respectivement actuel
ainsi que
• des secondes données de mesure, générées respectivement actuellement par la seconde unité, qui dépendent des mouvements et/ou positions de l'objet cible (3) détectées respectivement actuellement
sont combinées et comparées en continu dans le cadre du mode de suivi de point-cible commandé automatiquement par l'unité de contrôle (7) selon un algorithme prédéfini, en particulier à l'aide d'un filtre Kalman, et que, sur la base de celles-ci, il est dérivé un signal de commande pour la modification motorisée automatique en continu de l'alignement de la ligne de visée de telle manière que le point cible est visé en continu par la ligne de visée.

2. Système de mesure selon la revendication 1, **caractérisé en ce que**
• la première unité est configurée pour la génération des premières données de mesure avec un premier débit, en particulier à peu près entre 1 et 20 Hz, et la seconde unité est configurée pour la génération des secondes données de mesure avec un second débit, en particulier à peu près entre 50 et 500 Hz, cependant que le second débit est plus élevé que le premier débit et
• que, dans le cadre du mode de suivi de point cible, l'algorithme prédéfini est cadencé avec un troisième débit qui est plus élevé que le premier débit et en particulier qui correspond au second débit.

3. Système de mesure selon la revendication 2, **caractérisé en ce que**, dans le cadre de mode de suivi de point cible, le signal de commande est dérivé avec un quatrième débit qui est plus élevé que le premier débit et qui correspond en particulier au troisième débit et qu'une modification motorisée automatique continue de l'alignement de la ligne de visée est effectuée à l'aide du signal de commande.

4. Système de mesure selon l'une des revendications 1 à 3, **caractérisé en ce que**, dans le cadre du mode de suivi de point cible commandé automatiquement par l'unité de contrôle (7), les premières et les secondes données de mesure sont accumulées respectivement au-delà d'une période écoulée déterminée et, sur la base de celles-ci, une prédiction est effectuée à l'aide de l'algorithme pour ce qui est d'une position dans un avenir proche et/ou d'un mouvement de l'objet cible et que le signal de commande est dérivé en plus en tenant compte de cette prédiction.

5. Système de mesure selon l'une des revendications 1 à 4, **caractérisé en ce que** la seconde unité présente un système de mesure d'inertie (8), en particulier avec des capteurs d'accélération et des capteurs de vitesse de rotation basés sur la technologie MEMS, en particulier respectivement en trois axes.

6. Système de mesure selon l'une des revendications 1 à 5, **caractérisé en ce que** la seconde unité présente un module GNSS (9a) avec une antenne GNSS.

7. Système de mesure selon l'une des revendications 1 à 6, **caractérisé en ce que** la seconde unité est prévue pour la fixation en étant liée de manière rigide à l'objet cible (3).

8. Système de mesure selon l'une des revendications 1 à 7, **caractérisé en ce que** l'appareil de mesure (1, 11) présente une source de lumière qui émet des faisceaux de lumière légèrement divergents en direction de la ligne de visée, en particulier un laser, pour l'éclairage d'un rétroréflecteur qui représente l'objet cible (3).

9. Procédé de mesure pour la mesure et le suivi d'un objet cible (3) mobile qui définit un point cible en utilisant la première et la seconde unité selon l'une des revendications 1 à 8, avec
• une génération continue de premières données de mesure à l'aide de la première unité qui dépendent au moins
□ de l'alignement respectivement actuel de la ligne de visée et
□ du signal d'enregistrement respectivement actuel,
• une génération continue de secondes données de mesure à l'aide de la seconde unité qui dépendent des mouvements et/ou des positions détectées respectivement actuellement de l'objet cible (3),
• une combinaison et une comparaison continue, en particulier également une accumulation, des premières et des secondes données de mesure en appliquant un algorithme prédéfini, en particulier un filtre Kalman,
• une dérivation d'un signal de commande qui est effectuée sur la base de celles-ci pour la modification motorisée automatique continue de l'alignement de la ligne de visée de telle manière que le point cible est visé en continu par la ligne de visée.

10. Procédé de mesure selon la revendication 9, **caractérisé en ce que**
• la génération des premières données de mesure est effectuée avec un premier débit, en particulier d'environ entre 1 et 20 Hz, et la génération des secondes données de mesure est effectuée avec un second débit, en particulier d'environ entre 50 et 500 Hz, cependant que le second débit est plus élevé que le premier débit et
• l'algorithme prédéfini est cadencé avec un troisième débit qui est plus élevé que le premier débit et en particulier qui correspond au second débit et que des résultats sont ainsi obtenus à partir de l'application de l'algorithme avec le troisième débit.

11. Procédé de mesure selon la revendication 10, **caractérisé en ce que**
• la dérivation du signal de commande se fait avec un quatrième débit qui est plus élevé que le premier débit et en particulier qui correspond au troisième débit et
• une modification motorisée continue de l'alignement de la ligne de visée se fait à l'aide du signal de commande.

12. Procédé de mesure selon l'une des revendications 9 à 11, **caractérisé en ce qu'**en appliquant l'algorithme
• les premières et les secondes données de mesure sont accumulées respectivement au-delà d'une période écoulée déterminée et
• sur la base de celles-ci une détermination d'une prédiction est effectuée pour ce qui est d'une position dans un avenir proche et/ou d'un mouvement de l'objet cible
ainsi que la dérivation du signal de commande se fait en plus en tenant compte de cette prédiction.

13. Procédé de mesure selon la revendication 12, **caractérisé en ce qu'**en appliquant l'algorithme les premières et les secondes données de mesure accumulées au-delà d'une période écoulée déterminée sont pondérées de manière respectivement différente pour la détermination de la prédiction, cependant que des données générées pour des périodes plus reculées dans le temps ont tendance à être moins fortement pondérées que des données générées pour des périodes écoulées plus proches des premières et des secondes données de mesure respectivement accumulées.

14. Procédé de mesure selon la revendication 12 ou 13, **caractérisé en ce**
• **qu'**en appliquant l'algorithme les premières et les secondes données de mesure accumulées au-delà d'une période écoulée déterminée sont vérifiées individuellement quant à des erreurs de mesure par comparaison mutuelle et en particulier par régression et
• des données qui ont été trouvées erronées des premières et des secondes données de mesure respectivement accumulées sont prises en compte avec une pondération comparativement moindre ou ne sont pas prises en compte du tout pour la détermination de la prédiction.

15. Produit programme d'ordinateur avec code de programme qui est mémorisé sur un support lisible par machine pour l'exécution
• de la combinaison et de la comparaison en continu des premières et des secondes données de mesure selon l'algorithme prédéfini qui est mémorisé dans le code de programme et
• de la dérivation sur cette base du signal de commande du procédé de mesure selon l'une des revendications 9 à 14, en particulier lorsque le programme est réalisé sur l'unité de contrôle (7) du système de mesure selon l'une des revendications 1 à 8.
